(19) Europäisches Patentamt
European Patent Office
Office européen des brevets

(11) **EP 4 597 200 A1**

(12) **EUROPÄISCHE PATENTANMELDUNG**

(43) Veröffentlichungstag:
**06.08.2025 Patentblatt 2025/32**

(51) Internationale Patentklassifikation (IPC):
**G02B 26/10** (2006.01)

(21) Anmeldenummer: **24155133.2**

(52) Gemeinsame Patentklassifikation (CPC):
**G02B 26/101; G02B 26/105**

(22) Anmeldetag: **31.01.2024**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **OQmented GmbH**
**25524 Itzehoe (DE)**

(72) Erfinder: **BERLINSKI, Jan**
**24148 Kiel (DE)**

(74) Vertreter: **WSL Patentanwälte Partnerschaft mbB**
**Kaiser-Friedrich-Ring 98**
**65185 Wiesbaden (DE)**

(54) **VERFAHREN UND ANORDNUNG ZUM ANTREIBEN EINES MEMS-SPIEGELS**

(57) Die vorliegende Erfindung betrifft ein Verfahren zum Antreiben einer resonanten Schwingungsbewegung eines MEMS-Spiegels bezüglich einer ersten Schwingungsachse L1 und einer resonanten Schwingungsbewegung des MEMS-Spiegels bezüglich einer zweiten Schwingungsachse L2, mit den Schritten: (A) Steuern der Schwingungsbewegung des MEMS-Spiegels bezüglich der ersten Schwingungsachse L1 mit einer ersten Antriebsfrequenz FR1 größer Null, (B) Steuern der Schwingungsbewegung des MEMS-Spiegels bezüglich der zweiten Schwingungsachse L2 mit einer zweiten Antriebsfrequenz FR2 größer Null, wobei die erste Schwingungsachse und die zweite Schwingungsachse derart definiert sind und die erste Antriebsfrequenz FR1 und die zweite Antriebsfrequenz FR2 derart ausgebildet sind, dass die erste Antriebsfrequenz FR1 kleiner als die zweite Antriebsfrequenz FR2 ist.

Fig. 1

EP 4 597 200 A1

**Beschreibung**

Die vorliegende Erfindung betrifft ein Verfahren zum Antreiben einer resonanten Schwingungsbewegung eines MEMS-Spiegels bezüglich einer ersten Schwingungsachse L1 und einer resonanten Schwingungsbewegung des MEMS-Spiegels bezüglich einer zweiten Schwingungsachse L2, mit den Schritten: (A) Steuern der Schwingungsbewegung des MEMS-Spiegels bezüglich der ersten Schwingungsachse L1 mit einer ersten Antriebsfrequenz FR1 größer Null, (B) Steuern der Schwingungsbewegung des MEMS-Spiegels bezüglich der zweiten Schwingungsachse L2 mit einer zweiten Antriebsfrequenz FR2 größer Null, wobei die erste Schwingungsachse L1 und die zweite Schwingungsachse L2 derart definiert sind und die erste Antriebsfrequenz FR1 und die zweite Antriebsfrequenz FR2 derart ausgebildet sind, dass die erste Antriebsfrequenz FR1 kleiner als die zweite Antriebsfrequenz FR2 ist.

Resonant angetriebene MEMS-Spiegel (mikro-elektromechanische Systeme mit Spiegel oder synonym auch mikro-optisch-elektromechanische Systeme mit Spiegel) können dazu verwendet werden, Lichtbündel in ein zweidimensionales Sichtfeld eines Betrachters zu projizieren oder Lichtbündel aus dem Sichtfeld des Betrachters zu erfassen. Durch die zwei resonanten und sich überlagerten Schwingungsbewegungen des MEMS-Spiegels wird der MEMS-Spiegel derart verkippt, dass ein stationär und beständig auf den MEMS-Spiegel einfallendes Lichtbündel eine Spot-Trajektorie im Sichtfeld erzeugen würde, welche die Form einer Lissajous-Figur aufweist. Der verwendete bi-resonante Antrieb des MEMS-Spiegels, d.h. der Umstand, dass beide angetriebenen Schwingungsbewegungen resonante Schwingungsbewegungen sind, ermöglicht einen besonders energiesparenden Betrieb des MEMS-Spiegels als Projektor oder Detektor gegenüber Projektoren bzw. Detektoren, bei denen das Sichtfeld im euklidischen Sinne zeilen- und spaltenweise abgefahren wird, um eine Bild zu projizieren bzw. zu erfassen.

Allerdings hat sich gezeigt, dass es beispielsweise beim Projizieren von Bildern mittels Spot-Trajektorien in Form von Lissajous-Figuren zu unerwünschten Artefakten kommen kann, wie zum Beispiel einem Flimmern, welche vom menschlichen Auge - auch aufgrund der Physik und Physiologie des Auges - wahrgenommen werden. Die Art und Weise, wie ein Bild mit einer Lissajous-Figur projiziert wird, entscheidet daher mit darüber, ob die Projektion von einen Menschen als kontrastscharf und/oder flimmerfrei wahrgenommen wird.

Gleichzeitig ist es insbesondere beim Betrieb von MEMS-Spiegeln, insbesondere wenn sie in einer Augmented-Reality-Brille (AR-Brille) als Kernbestandteil eines Projektors oder Sensors verwendet werden sollen, sehr wichtig, eine hohe Energieausbeute zu erzielen.

Vor diesem Hintergrund ist es insbesondere eine Aufgabe der vorliegenden Erfindung, eine kontrastscharfe Projektion oder Erfassung eines Bildes im Sichtfeld eines Betrachters mit einem MEMS-Spiegel zu ermöglichen - bei gleichzeitiger Ermöglichung einer hohen Energieausbeute.

Dies Aufgabe wird gelöst durch ein Verfahren zum Antreiben einer resonanten Schwingungsbewegung eines MEMS-Spiegels bezüglich einer ersten Schwingungsachse L1 und einer resonanten Schwingungsbewegung des MEMS-Spiegels bezüglich einer zweiten Schwingungsachse L2, mit den Schritten: (A) Steuern der Schwingungsbewegung des MEMS-Spiegels bezüglich der ersten Schwingungsachse L1 mit einer ersten Antriebsfrequenz FR1 größer Null, (B) Steuern der Schwingungsbewegung des MEMS-Spiegels bezüglich der zweiten Schwingungsachse L2 mit einer zweiten Antriebsfrequenz FR2 größer Null, wobei die erste Schwingungsachse L1 und die zweite Schwingungsachse L2 derart definiert sind und die erste Antriebsfrequenz FR1 und die zweite Antriebsfrequenz FR2 derart ausgebildet sind, dass die erste Antriebsfrequenz FR1 kleiner als die zweite Antriebsfrequenz FR2 ist.

Es hat sich gezeigt, dass mit einer derartigen Steuerung der Antriebsfrequenzen FR1 und FR2 die Voraussetzungen geschaffen werden, besonders kontrastscharfe und gleichzeitig flimmerfeie Projektionen eines Bildes zu ermöglichen.

Gemäß einer nicht-beschränkend zu verstehenden Ausführungsform des erfindungsgemäßen Verfahrens werden die Schwingungsbewegungen des MEMS-Spiegels in den Schritten A und B derart gesteuert, dass der Quotient, der sich aus der ersten Antriebsfrequenz FR1 als Dividend und der zweiten Antriebsfrequenz FR2 als Divisor ergibt, in einem Regelbetrieb kleiner 0,5000 oder gleich 0,5000 ist.

Es hat sich gezeigt, dass mit Antriebsfrequenzen FR1 und FR2, für die der Quotient im angegeben Bereich liegt, eine besonders flimmerfreie Projektion eines Bildes ermöglicht wird.

Unter einem Steuern wird im Sinne der vorliegenden Erfindung das veränderliche Einstellen einer Größe verstanden, hier also insbesondere das veränderliche Einstellen der Antriebsfrequenzen FR1 und FR2. "Veränderlich" bedeutet in diesem Kontext, dass eine Veränderung der Antriebsfrequenzen FR1 und FR2 vom Steuern umfasst aber nicht zwingend gefordert ist. Das heißt, sofern sich beispielsweise vordefinierte Regelgrößen innerhalb eines erlaubten Toleranzbereiches befinden, können die Antriebsfrequenzen FR1 und FR2 auch konstant gehalten werden. Auch ein solches Konstant-halten ist unter dem Steuern der Antriebsfrequenzen FR1 und FR2 zu verstehen.

Das Bestimmen der Werte der Antriebsfrequenzen FR1 und FR2 erfolgt mit einer endlichen Mess-Integrationszeit. Diese Mess-Integrationszeit kann zum Beispiel eine Sekunde betragen. Die beiden Schwingungsbewegungen können insbesondere derart gesteuert werden, dass der Quotient für mehr als eine Sekunde und/oder länger als die gewählte Integralzeit zum Bestimmen der Werte der Antriebsfrequenzen während des Regelbetriebs im angegebenen Bereich gehalten wird, insbesondere bei einem spezifischen Wert innerhalb des angegebenen Bereichs mit einer Toleranz von $\pm0{,}0001$ gehalten wird.

Der beim Verfahren verwendete MEMS-Spiegel ist insbesondere derart ausgebildet, dass die erste Schwingungsachse L1 und die zweite Schwingungsachse L2 nicht-parallel zueinander ausgerichtet sind. Bevorzugt sind die beiden Schwingungsachsen orthogonal zueinander ausgerichtet.

Im Folgenden wird der Einfachheit halber nur der Begriff "Ausführungsform" verwendet, wobei immermitzulesen ist, dass es sich dabei um nicht beschränkend zu verstehende Ausführungsformen handelt.

Gemäß einer Ausführungsform des erfindungsgemäßen Verfahrens werden die Schritte A und B zeitlich synchron durchgeführt. Dies bedeutet, dass das Einstellen der ersten Antriebsfrequenz FR1 und das Einstellen der zweiten Antriebsfrequenz FR2 zeitlich zueinander synchron erfolgt. Dies ermöglicht eine besser Bildprojektion im Falle einer Projektion.

Gemäß einer Ausführungsform des erfindungsgemäßen Verfahrens erfolgt im Regelbetrieb ein Wechsel von einer Ansteuerung eines ersten Quotienten von erster und zweiter Antriebsfrequenz auf eine Ansteuerung eines sich hiervon unterscheidenden zweiten Quotienten von erster und zweiter Antriebsfrequenz. Das Verfahren kann dabei vorsehen, dass solcher Wechsel event-basiert erfolgt, beispielsweise aufgrund sich veränderter Bildinhalte des projizierten Bildes.

Unter dem Regelbetrieb wird im Sinne der vorliegenden Erfindung derjenige Betrieb eines MEMS-Spiegels verstanden, in dem der MEMS-Spiegel seinen hauptsächlichen Verwendungszweck, also das Projizieren oder Erfassen von Bildern, verwirklicht. Dabei werden Startvorgänge wie zum Beispiel ein Einschwingen des MEMS-Spiegels, die notwendig sind, um in den Regelbetrieb zu gelangen aber nicht zum Regelbetrieb zu zählen sind, außer Betracht gelassen.

Gemäß einer Ausführungsform des erfindungsgemäßen Verfahrens werden die Schwingungsbewegungen des MEMS-Spiegels in den Schritten A und B derart gesteuert, dass der Quotient, der sich aus der ersten Antriebsfrequenz FR1 als Dividend und der zweiten Antriebsfrequenz FR2 als Divisor ergibt, größer als 0,0500 und kleiner als 0,4878, vorzugsweise größer als 0,0500 und kleiner als 0,4800 besonders bevorzugt größer als 0,0500 und kleiner als 0,4500 ist.. Testreihen haben ergeben, dass diese Parameterbereiche mit einer guten und flimmerfreien Wahrnehmung eines mit dem MEMS-Spiegel projizierten Bildes einhergehen.

Gemäß einer Ausführungsform des erfindungsgemäßen Verfahrens werden die Schwingungsbewegungen des MEMS-Spiegels in den Schritten A und B derart gesteuert, dass der Quotient, der sich aus der ersten Antriebsfrequenz FR1 als Dividend und der zweiten Antriebsfrequenz FR2 als Divisor ergibt, aus einem geschlossenen Quotient-Intervall ausgewählt ist aus der Gruppe von Quotient-Intervallen bestehend aus: [0,0001; 0,0063], [0,1225; 0,1259], [0,1232; 0,1260], [0,1240; 0,1268], [0,1241; 0,1274], [0,1402; 0,1438], [0,1410; 0,1438], [0,1419; 0,1448], [0,1419; 0,1456], [0,1636; 0,1675], [0,1646; 0,1676], [0,1657; 0,1687], [0,1658; 0,1697], [0,1966; 0,2009], [0,1977; 0,2010], [0,1990; 0,2023], [0,1991; 0,2035], [0,2458; 0,2508], [0,2473; 0,2509], [0,2491; 0,2527], [0,2492; 0,2542], [0,2828; 0,2865], [0,2837; 0,2867], [0,2847; 0,2877], [0,2848; 0,2886], [0,3276; 0,3340], [0,3300; 0,3342], [0,3325; 0,3367], [0,3326; 0,3390], [0,3722; 0,3759], [0,3732; 0,3760], [0,3740; 0,3768], [0,3741; 0,3778], [0,3961; 0,4008], [0,3975; 0,4009], [0,3991; 0,4025], [0,3992; 0,4039], [0,4255; 0,4295], [0,4265; 0,4295], [0,4276; 0,4307], [0,4277; 0,4317], [0,4911; 0,4999] und [0,4950; 0,4999]. In zahlreichen Testreihen wurden diese Wertebereiche mit äußerst geringer Bandbreite identifiziert, da sie - wenn der Quotient auf einen Wert innerhalb dieser Bereiche gesteuert wird -mit flimmerfreien Bildaufbau einhergehen.

Unter der vereinfachten Schreibweise eines Werteintervalls [a; b] ist im Sinne der vorliegenden Erfindung zu verstehen, dass der Quotient auf einen Wert von a bis b gesteuert werden kann. Insbesondere kann der Quotient mit einer Toleranz von $\pm0{,}0001$ auf einen spezifischen Wert innerhalb des Intervalls über einen Zeitraum von länger als eine Sekunde gesteuert werden.

Insbesondere und gemäß einer Ausführungsform des erfindungsgemäßen Verfahrens werden die Schwingungsbewegungen des MEMS-Spiegels in den Schritten A und B derart gesteuert, dass der Quotient, der sich aus der ersten Antriebsfrequenz FR1 als Dividend und der zweiten Antriebsfrequenz FR2 als Divisor ergibt, aus dem geschlossenen Quotient-Intervall [0,4911; 0,4999], bevorzugt aus dem geschlossenen Intervall [0,4950; 0,4999] und besonders bevorzugt aus dem geschlossenen Intervall [0,4989; 0,4994] ausgewählt ist. Werte aus diesen Intervallen gehen mit besonders flimmerfreien Wahrnehmungs-Eigenschaften einher.

Gemäß einer Ausführungsform des erfindungsgemäßen Verfahrens werden die Schwingungsbewegungen des MEMS-Spiegels in den Schritten A und B derart gesteuert, dass der Quotient, der sich aus der ersten Antriebsfrequenz FR1 als Dividend und der zweiten Antriebsfrequenz FR2 als Divisor ergibt, aus dem geschlossenen Quotienten-Intervall [0,0001; 0,0116] ausgewählt ist.

Gemäß einer Ausführungsform des erfindungsgemäßen Verfahrens wird der MEMS-Spiegel im Regelbetrieb zur Projektion oder zum Scannen eines Bildes betrieben, wobei die erste Antriebsfrequenz FR1 und/oder die zweite Antriebsfrequenz FR2 im Regelbetrieb des MEMS-Spiegels verändert wird, um mindestens eine Regelungsgröße wie zum Beispiel die Größe des von einem Betrachter wahrnehmbaren und vom MEMS-Spiegel abtastbaren Sichtfeldes innerhalb eines Soll-Wert-Intervalls oder eine Trajektorie einer Lissajous-Figur innerhalb einer Soll-Einhüllenden der Trajektorie zu regeln. Im letzteren Fall sind die Schwingungsbewegungen des MEMS-Spiegels, welche mit einer dazugehörigen abtastbaren Trajektorie assoziiert ist, diejenige, die es u.a. durch Steuerung der Antriebsfrequenzen FR1 und FR2 zu regeln gilt.

Gemäß einer Ausführungsform des erfindungsgemäßen Verfahrens werden die erste Antriebsfrequenz FR1 und/oder die zweite Antriebsfrequenz FR2 im Regelbetrieb des MEMS-Spiegels derart verändert, dass das von einem Betrachter wahrnehmbare und vom MEMS-Spiegel abtastbare Sichtfeld - insbesondere die Größe dieses Sichtfeldes - innerhalb eines hierfür vordefinierten Soll-Wert-Intervalls geregelt ist. Das Sichtfeld und insbesondere die Größe des Sichtfeldes können auch zusammen mit der abtastbaren Trajektorie des MEMS-Spiegels eine Mehrzahl von Regelgrößen definieren, die innerhalb eines Soll-Intervalls oder innerhalb einer Soll-Einhüllenden (Im Falle der Trajektorie) mittels der Steuerung der ersten und zweiten Antriebsfrequenzen FR1 und FR2 geregelt werden.

Gemäß einer Ausführungsform des erfindungsgemäßen Verfahrens werden die erste Antriebsfrequenz FR1 und/oder die zweite Antriebsfrequenz FR2 im Regelbetrieb des MEMS-Spiegels derart gesteuert, dass die räumliche Auflösung eines projizierten oder erfassten Bildes innerhalb eines hierfür vordefinierten Soll-Wert-Intervalls geregelt ist. Auch die Regelgröße "räumliche Auflösung" kann für sich alleine oder gemeinsam kombiniert mit den zuvor genannten möglichen Regelgrößen innerhalb entsprechender Soll-Wert-Intervalle geregelt werden

Gemäß einer Ausführungsform des erfindungsgemäßen Verfahrens werden die erste Antriebsfrequenz FR1 und/oder die zweite Antriebsfrequenz FR2 im Regelbetrieb des MEMS-Spiegels derart gesteuert, dass die Phase der Schwingungsbewegung des MEMS-Spiegels bezüglich der ersten Schwingungsachse L1 und/oder die Phase der Schwingungsbewegung des MEMS-Spiegels bezüglich der zweiten Schwingungsachse L2 innerhalb eines hierfür vordefinierten Soll-Wert-Intervalls geregelt ist. Auch die Regelgrößen "Phase" können jeweils für sich alleine oder gemeinsam kombiniert mit den zuvor genannten möglichen Regelgrößen innerhalb entsprechender Soll-Wert-Intervalle geregelt werden

Gemäß einer Ausführungsform des erfindungsgemäßen Verfahrens werden die erste Antriebsfrequenz FR1 und/oder die zweite Antriebsfrequenz FR2 im Regelbetrieb des MEMS-Spiegels derart gesteuert, dass der Bildaufbaugeschwindigkeitsvektor eines projizierten oder erfassten Bildes innerhalb eines hierfür vordefinierten Soll-Wert-Intervalls geregelt ist. Insbesondere werden sowohl Richtung als auch Betrag des zwei-dimensionalen Bildaufbaugeschwindigkeitsvektors innerhalb dazugehöriger Soll-Wert-Intervalle geregelt. Auch die Regelgröße "Bildaufbaugeschwindigkeitsvektor" kann für sich alleine oder gemeinsam mit den zuvor genannten möglichen Regelgrößen innerhalb entsprechender Soll-Wert-Intervalle geregelt werden

Das Verfahren kann demnach in einer Ausführungsform derart ausgebildet sein, dass für das vom Betrachter wahrnehmbare Sichtfeld hinsichtlich Größe und Position Soll-Wert-Intervalle eingestellt und für die abtastbare Trajektorie des MEMS-Spiegels eine Soll-Einhüllende eingestellt werden, wobei die erste Antriebsfrequenz FR1 und die zweite Antriebsfrequenz FR2 dann derart gesteuert werden, dass das Sichtfeld und die Trajektorie innerhalb dieser Intervalle geregelt sind.

Gemäß einer Ausführungsform des erfindungsgemäßen Verfahrens sind die erste Antriebsfrequenz FR1 und die zweite Antriebsfrequenz FR2 derart gesteuert, dass eine vom MEMS-Spiegel abtastbare zweidimensionale Trajektorie *TR* mit fortlaufender Zeit t im Wesentlichen folgende Parametrisierung erfüllt:

$$\boldsymbol{TR} = \left(\cos(2 * \pi * \mathrm{m} * \mathrm{LPS} * \mathrm{t}), \cos\left(2 * \pi * \mathrm{n} * \mathrm{LPS} * \mathrm{t} - \left(\frac{\alpha}{m}\right) * \pi\right)\right),$$

wobei m und n dimensionslose Größen sind, die jeweils ganze Zahlen annehmen und die als erster Coprime-Faktor m und zweiter Coprime-Faktor n einer Lissajous-Figur bezeichnet werden, wobei die Größe LPS eine rationale Zahl mit der Einheit 1/s annimmt, wobei die Größe $\alpha$ eine rationale Zahl mit der Einheit rad annimmt. Die angestrebte abtastbare Trajektorie kann somit durch die Vorgabe der Coprime-Faktoren m und n, die Phasengröße $\alpha$ und die Größe LPS vollständig und eindeutig definiert werden. Die Größe LPS steht für den Ausdruck "Lissajous-Figur pro Sekunde" und gibt technisch an, wie oft eine durch die Parametrisierung *TR* definierte Lissajous-Figur pro Sekunde durchlaufen wird, also abgetastet wird. Die Einheit von LPS ist daher "1/s" oder mit anderen Worten "Hz". Die direkte Regelung der Trajektorie bewirkt eine unmittelbare und damit äußerst präzise Steuerung der Schwingungsbewegungen des MEMS-Spiegels. Die Position bzw. Ausrichtung des MEMS-Spiegels und die damit verbundene Lage eines vom MEMS-Spiegels reflektierten Lichtbündels - auch Spot genannt - im wahrnehmbaren Sichtfeld des Betrachters können hierdurch präzise eingeregelt werden, was eine scharfe und qualitativ hochwertige Bilddarstellung ermöglicht.

Gemäß einer Ausführungsform des erfindungsgemäßen Verfahrens sind die erste Antriebsfrequenz FR1 und die zweite Antriebsfrequenz FR2 derart gesteuert, dass der erste Coprime-Faktor m im Regelbetrieb des MEMS-Spiegels einen Wert ausgewählt aus dem geschlossenen Intervall [1; 5000], vorzugsweise ausgewählt aus dem geschlossenen Intervall [1; 2500], annimmt und/oder der zweite Coprime-Faktor n im Regelbetrieb des MEMS-Spiegels einen Wert ausgewählt aus dem geschlossenen Intervall [1; 5000], vorzugsweise ausgewählt aus dem geschlossenen Intervall [1; 2500], annimmt.

Gemäß einer Ausführungsform des erfindungsgemäßen Verfahrens sind die erste Antriebsfrequenz FR1 und/oder die zweite Antriebsfrequenz FR2 im Regelbetrieb des MEMS-Spiegels derart gesteuert, dass die vom MEMS-Spiegel abtastbare Trajektorie innerhalb einer Einhüllenden der durch die folgende Parametrisierung vorgege-

$$\left(\cos(2 * \pi * \quad m * LPS * t), \cos\left(2 * \pi * n * LPS * t - \left(\frac{\alpha}{m}\right) * \pi\right)\right)$$

benen Trajektorie liegt: , wobei der Toleranzbereich der Einhüllenden vorzugsweise derart ausgebildet ist, dass sich zumindest zwei benachbarte Toleranzbereichabschnitte, die zwei sich im Wesentlichen parallel und gerade erstreckender Trajektorienabschnitte zugeordnet sind, nicht überlappen. Es hat sich gezeigt, dass dies eine pragmatisch sinnvolle Wahl der Einhüllenden ist, die eine hohe Bildqualität garantiert.

Gemäß einer Ausführungsform des erfindungsgemäßen Verfahrens sind die erste Antriebsfrequenz FR1 und die zweite Antriebsfrequenz FR2 derart gesteuert, dass die Größe LPS im Regelbetrieb des MEMS-Spiegels einen Wert ausgewählt aus dem geschlossenen Intervall [20; 300] annimmt, wobei die erste Antriebsfrequenz FR1 und die zweite Antriebsfrequenz FR2 vorzugsweise derart gesteuert sind, dass die Größe LPS im Regelbetrieb einen Wert ausgewählt aus dem geschlossenen Intervall [20; 95] oder einen Wert ausgewählt aus dem geschlossenen Intervall [105; 260] annimmt, wobei die erste Antriebsfrequenz FR1 und die zweite Antriebsfrequenz FR2 besonders bevorzugt derart gesteuert sind, dass die Größe LPS im Regelbetrieb einen Wert ausgewählt aus dem geschlossenen Intervall [40; 90] oder einen Wert ausgewählt aus dem geschlossenen Intervall [120; 200] annimmt. Diese Wertebereiche haben sich der Auflistung nach aufsteigend als besonders vorteilhaft erwiesen, da sie mit positiven Wahrnehmungseffekten wie einer weitestgehend flimmerfreien Darstellung eines Bildes einhergehen. Insbesondere kann das Verfahren derart ausgebildet sein, dass die Größe LPS im Regelbetrieb einen Wert ausgewählt aus dem geschlossenen Intervall [45; 75] annimmt.

Gemäß einer Ausführungsform des erfindungsgemäßen Verfahrens sind die erste Antriebsfrequenz FR1 und/oder die zweite Antriebsfrequenz FR2 im Regelbetrieb des MEMS-Spiegels derart gesteuert, dass die Größe LPS mit einer Toleranz von $\pm 1$, vorzugsweise $\pm 0,1$ und besonders bevorzugt $\pm 0,01$ geregelt ist. Dies erlaubt eine flexible Regelung, wodurch Zeiten, in denen der Bildaufbau vollständig zusammenbricht, verkürzt oder gar vollständig vermieden werden können.

Gemäß einer Ausführungsform des erfindungsgemäßen Verfahrens sind die erste Antriebsfrequenz FR1 und die zweite Antriebsfrequenz FR2 derart gesteuert, dass die Größe $\alpha$ mit einer Toleranz von $\pm 0,15$ auf einen ganzzahligen oder halbzahligen Zahlenwert geregelt ist. Auch dies bewirkt eine Robustheit des Bildaufbaus gegenüber äußeren Einflüssen.

Gemäß einer Ausführungsform des erfindungsgemäßen Verfahrens sind die erste Antriebsfrequenz FR1 und die zweite Antriebsfrequenz FR2 derart gesteuert, dass zumindest zwei Trajektorienabschnitte im Zeitraum (1/LPS) streckenweise identisch sind, aber entgegengesetzt zueinander durchlaufen und abgetastet werden. In diesem Fall wird von einem degenerierten Fall gesprochen, bei dem ein gedachtes permanentes auf dem MEMS-Spiegel reflektiertes Lichtbündel einen ersten Abschnitt einer Trajektorie im Sichtfeld zunächst abfährt und dann in umgekehrter Richtung denselben Trajektorienabschnitt wieder zurückfährt. Dies ermöglicht in speziellen Anwendungsfällen einen besonders stabilen Bildaufbau, geht aber mit einem Verlust an räumlicher Auflösung einher.

Im Sinne der vorliegenden Erfindung wird mit der "abtastbare Trajektorie" diejenige Trajektorie verstanden, die ein gedachtes und permanent existentes Lichtbündel, welches vom MEMS-Spiegel reflektiert wird und einen infinitesimal kleinen Lichtspot im wahrnehmbare Sichtfeld des Betrachters erzeugt, in diesem Sichtfeld ausleuchtet, wenn der MEMS-Spiegel die Schwingungsbewegungen bezüglich der ersten und zweiten Schwingungsachse durchführt. Für das tatsächliche Ausleuchten eines Bildes wird in der Praxis ein Lichtbündel verwendet, welches einen endlich großen Lichtspot im wahrnehmbaren Sichtfeld des Betrachters erzeugt.

Gemäß einer Ausführungsform des erfindungsgemäßen Verfahrens sind die erste Antriebsfrequenz FR1 und die zweite Antriebsfrequenz FR2 derart gesteuert, dass kein Paar von Trajektorienabschnitten im Zeitraum (1/LPS) streckenweise identisch ist. Hier wird oftmals vom nicht-degenerativen Fall gesprochen, der insbesondere eine höhere Auflösung und/oder Ausbeute der Projektion ermöglichen kann.

Unter einem Trajektorienabschnitt ist im Sinne der vorliegenden Erfindung immer ein länglich ausgebildeter Abschnitt zu verstehen und folglich kein einzelner Punkt auf der Trajektorie. Wenn sich daher zwei Trajektorienabschnitte nur in einem Punkt schneiden, sind diese Trajektorienabschnitte nicht deshalb streckenweise identisch.

Gemäß einer Ausführungsform des erfindungsgemäßen Verfahrens werden die Schwingungsbewegungen des MEMS-Spiegels in den Schritten A und B derart geregelt oder gesteuert, dass mindestens 80%, vorzugsweise mindestens 90% und besonders bevorzugt 100% eines für einen Betrachter wahrnehmbaren Sichtfeldes in einem Zeitraum (1/LPS) abgetastet wird.

Im Sinne der vorliegenden Erfindung ist jeder Punkt im Sichtfeld abtastbar, der grundsätzlich mit einem gedachten und auf dem MEMS-Spiegel reflektierten Lichtbündel erreichbar wäre. Mit "ausleuchtbar" sind hingegen alle jene Punkte der Trajektorie im Sichtfeld beschrieben, die tatsächlich aufgrund der Einstellungen einer zugrundeliegenden MEMS-Spiegel-Steuerung ausgeleuchtet werden können. Bei der Darstellung eines Bildes werden dann wiederum nur diejenigen Teilabschnitte der ausleuchtbaren Trajektorienabschnitte ausgeleuchtet, die für die Darstellung des jeweiligen Bildes (des sogenannten Contents) benötigt werden.

Gemäß einer Ausführungsform des erfindungsgemäßen Verfahrens umfasst das Verfahren zumindest den folgenden weiteren Schritt: (C1) Beleuchten des MEMS-Spiegels mit einer Lichtquelle, wobei die Schwingungsbewegungen des MEMS-Spiegels in den Schritten A und B derart gesteuert werden, dass ein gedachtes permanent von der Lichtquelle emittiertes und vom MEMS-Spiegel reflektiertes Lichtbündels eine Trajektorie in einem von einem Betrachter wahrnehmbaren Sichtfeld abtastet, wobei der MEMS-Spiegel derart von der Lichtquelle beleuchtet wird, dass das Sichtfeld zumindest entlang eines Abschnitts oder mehrere Abschnitte der Trajektorie ausgeleuchtet wird, um ein Bild in diesem Sichtfeld zu projizieren. Aufgrund des verwendeten Verfahrens ist das hierdurch wiedergebende Bild besonders kontrastscharf.

Gemäß einer Ausführungsform des erfindungsgemäßen Verfahrens umfasst das Verfahren zumindest den folgenden weiteren Schritt: (C2) Detektieren eines vom MEMS-Spiegels tatsächlich reflektierten Lichtbündels mit einem Detektor, wobei die Schwingungsbewegungen des MEMS-Spiegels in den Schritten A und B derart gesteuert werden, dass ein gedachtes vom Detektor emittiertes und vom MEMS-Spiegel reflektiertes Lichtbündels eine Trajektorie in einem von einem Betrachter wahrnehmbaren Sichtfeld abtastet, wobei der Detektor ein aus dem Sichtfeld des Betrachters stammendes und vom MEMS-Spiegel reflektiertes tatsächliches Lichtbündel derart erfasst, dass ein Bild aus dem Sichtfeld zumindest entlang eines Abschnitts oder mehrere Abschnitte der Trajektorie erfasst wird.

Das erfindungsgemäße Verfahren kann also folglich sowohl zum Projizieren (mit Schritt C1) als auch zum Erfassen (mit Schritt C2) genutzt werden.

Gemäß einer Ausführungsform des erfindungsgemäßen Verfahrens sind die erste Antriebsfrequenz FR1 und die zweite Antriebsfrequenz FR2 derart gesteuert, dass die vollständige potentiell abtastbare Trajektorie im wahrnehmbaren Sichtfeld eines Betrachtes während eines Zeitraums von (1/LPS) eine geschlossene Lissajous-Figur umfasst und vorzugsweise ist.

Gemäß einer Ausführungsform des erfindungsgemäßen Verfahrens werden die Schwingungsbewegungen des MEMS-Spiegels in den Schritten A und B derart gesteuert und wird der MEMS-Spiegel im Schritt C1 derart beleuchtet oder im Schritt C2 das vom MEMS-Spiegel reflektierte Licht derart erfasst, dass die maximal erreichbare Raumwinkelausleuchtgeschwindigkeit bzw. Raumwinkelerfassungsgeschwindigkeit im für einen Betrachter wahrnehmbaren Sichtfeld zwischen einschließlich 750 Quadratgrad/s und einschließlich 7500000 Quadratgrad/s, vorzugsweise zwischen einschließlich 10000 Quadratgrad/s und einschließlich 1500000 Quadratgrad/s, bzw. besonders bevorzugt zwischen einschließlich 15000 Quadratgrad/s und einschließlich 900000 Quadratgrad/s beträgt. Dabei ist die Raumwinkelausleuchtgeschwindigkeit/Raumwinkelerfassungsgeschwindigkeit derart zu verstehen, dass diese unabhängig von der Größe des Lichtspots, der von einem auf dem MEMS-Spiegel reflektierten Lichtbündel im Sichtfeld erzeigt wird, ist. Die Raumwinkelausleuchtgeschwindigkeit/Raumwinkelerfassungsgeschwindigkeit ist eine auf die Trajektorie selbst bezogene Größe, wobei zugrunde gelegt wird, dass zwischen zwei benachbarten Trajektorienabschnitten keine Lücke beim Ausleuchten bleibt, nachdem diese beiden Trajektorienabschnitte abgefahren worden sind. Es hat sich herausgestellt, dass die genannten Wertebereiche der Auflistung aufsteigend folgend sich vorteilhaft auf die Wahrnehmung durch das menschliche Auge auswirken.

Gemäß einer Ausführungsform des erfindungsgemäßen Verfahrens wird das vom Betrachter wahrnehmbare Sichtfeld zumindest bereichsweise mittels Zeilensprungverfahren in Schritt C1 ausgeleuchtet oder in Schritt C2 erfasst, dass in einem Bereich des vom Betrachter wahrnehmbaren Sichtfeldes benachbarte und sich im Wesentlichen parallel erstreckende abtastbare Trajektorienabschnitte nicht unmittelbar zeitlich nacheinander ausgeleuchtet werden. Vorzugsweise erstreckt sich der hier beschriebene Bereich des wahrnehmbaren Sichtfeldes über mindestens 75% des gesamten wahrnehmbaren Sichtfeldes.

Unter der Bezeichnung "im Wesentlichen parallel" ist im Sinne der vorliegenden Erfindung eine Toleranz von 10 Grad zu verstehen. Unter sich im Wesentlichen parallel erstreckenden Trajektorienabschnitten sind demnach Trajektorienabschnitte zu verstehen, die nur einen sehr geringen Neigungswinkel größer Null, insbesondere einen Neigungswinkel von weniger als 10 Grad, zueinander aufweisen.

Gemäß einer Ausführungsform des erfindungsgemäßen Verfahrens werden die Schwingungsbewegungen des MEMS-Spiegels in den Schritten A und B derart gesteuert und wird der MEMS-Spiegel im Schritt C1 derart beleuchtet oder im Schritt C2 das vom MEMS-Spiegel reflektierte Licht derart erfasst, dass ein mit der Einheit grad/s messbare und im Wesentlichen senkrecht zu aufeinanderfolgend ausgeleuchteten und sich im Wesentlichen parallel zueinander erstreckenden Trajektorienabschnitten ausgerichteter lokaler Bildaufbaugeschwindigkeitsvektor in einem Bereich von mindestens 50 % des abtastbaren Sichtfeldes einen Betrag aufweist, der größer als 1700 Grad pro Sekunde ist. Es hat sich gezeigt, dass dieser Grenzwert sinnvoll ist, um einen besonders ruhig wahrnehmbaren Bildaufbau zu bewirken, insbesondere in der Mitte eines Sichtfeldes.

Gemäß einer Ausführungsform des erfindungsgemäßen Verfahrens werden die Schwingungsbewegungen des MEMS-Spiegels in den Schritten A und B derart gesteuert und wird der MEMS-Spiegel im Schritt C1 derart beleuchtet, dass zumindest in einem Teilbereich des vom Betrachter wahrnehmbaren Sichtfelds ein Bild entlang einer ersten Bildaufbaurichtung projiziert oder erfasst wird, wobei die erste Bildaufbaurichtung zu einer Mehrzahl von ausgeleuchteten Trajektorienabschnitten im Wesentlichen senkrecht ausgerichtet ist, wobei sich die Mehrzahl von ausgeleuchteten Trajektorienabschnitten in Richtung der ersten Bildaufbaurichtung im Wesentlichen parallel zueinander erstrecken und der Bildaufbaurichtung folgend ausgeleuchtet bzw. erfasst werden. Diese Definition gilt für Bildaufbaurichtungen im Allgemeinen in Sinn der vorliegenden Erfindung. Im Falle eines Projektors bedeutet dies, dass die hierfür verwendete Lichtquelle dann potentiell leuchten kann, das heißt Lichtbündel mit einer für den Menschen wahrnehmbaren Helligkeit aussenden kann, wenn der MEMS-Spiegel gerade einen Trajektorienabschnitt abtastet, der parallel zu dem zeitlich vorangegangenen Trajektorienabschnitt verläuft, bei dem die Lichtquelle ebenfalls potentiell leuchten konnte. Zeitlich betrachtet kann sich dann ein Trajektorienabschnitt an den vorangegangenen im Wesentlichen parallelen Trajektorienabschnitt anschließen. Bildabschnittsweise erstreckt sich die Mehrzahl von ausgeleuchteten Trajektorienabschnitten in Richtung der Bildaufbaurichtung im Wesentlichen parallel zueinander und die Trajektorienabschnitte werden der Bildaufbaurichtung folgend zeitlich nacheinander ausgeleuchtet bzw. erfasst.

Gemäß einer Ausführungsform des erfindungsgemäßen Verfahrens werden die Schwingungsbewegungen des MEMS-Spiegels in den Schritten A und B derart gesteuert und wird der MEMS-Spiegel im Schritt C1 derart beleuchtet, dass zumindest zwei sich im Wesentlichen parallel zueinander erstreckende und unmittelbar benachbarte ausgeleuchtete Trajektorienabschnitte jeweils eine Bildaufbaurichtung aufweisen, die der Bildaufbaurichtung des jeweils anderen Trajektorienabschnitt im Wesentlichen entgegengesetzt ist. Dies ermöglicht einen schnellen Bildaufbau bzw. eine hohe Auflösung, da ein größerer Anteil der abtastbaren Trajektorie ausleuchtbar ist als bei einem Verfahren, bei dem sich der Bildaufbau auf eine einzige Bildaufbaurichtung beschränkt.

Insbesondere können Bereiche des Sichtfeldes mittels Zeilensprungverfahren ausgeleuchtet werden, wobei die beiden dabei verwendeten und verschachtelten Gruppen von Trajektorienabschnitten zueinander entgegengesetzte Bildaufbaurichtungen aufweisen.

Gemäß einer Ausführungsform des erfindungsgemäßen Verfahrens werden die Schwingungsbewegungen des MEMS-Spiegels in den Schritten A und B derart gesteuert und wird der MEMS-Spiegel im Schritt C1 derart beleuchtet, dass ein erster ausgeleuchteter Trajektorienabschnitt eine erste Bildaufbaurichtung aufweist, ein zweiter ausgeleuchteter Trajektorienabschnitt eine zweite Bildaufbaurichtung aufweist, ein dritter ausgeleuchteter Trajektorienabschnitt eine dritte Bildaufbaurichtung aufweist und ein vierter ausgeleuchteter Trajektorienabschnitt eine vierte Bildaufbaurichtung aufweist, wobei sich der erste ausgeleuchtete Trajektorienabschnitt und der zweite ausgeleuchtete Trajektorienabschnitt im Wesentlichen parallel zueinander erstrecken, wobei sich der dritte ausgeleuchtete Trajektorienabschnitt und der vierte ausgeleuchtete Trajektorienabschnitt im Wesentlichen parallel zueinander erstrecken, wobei die erste Bildaufbaurichtung und die zweite Bildaufbaurichtung im Wesentlichen parallel und entgegengesetzt zueinander ausgerichtet sind (auch als anti-parallel bezeichnet), wobei die dritte und die vierte Bildaufbaurichtung im Wesentlichen parallel und entgegengesetzt zueinander ausgerichtet sind, sodass die erste und die zweite Bildaufbaurichtung jeweils nicht im Wesentlichen parallel zur dritten und vierten Bildaufbaurichtung ausgerichtet sind. Durch die damit verbundene Ausnutzung aller vier möglichen Bildaufbaurichtungen kann die Energie-Effizienz weiter gesteigert werden. Gemäß einer weiteren Ausführungsform des erfindungsgemäßen Verfahrens schneiden sich der erste ausgeleuchtete Trajektorienabschnitt und der dritte ausgeleuchtete Trajektorienabschnitt, vorzugsweisemit einem Schnittwinkel ungleich 90 Grad, und schneiden sich der zweite ausgeleuchtete Trajektorienabschnitt und der vierte ausgeleuchtete Trajektorienabschnitt, vorzugsweise mit einem Schnittwinkel ungleich 90 Grad.

Gemäß einer Ausführungsform des erfindungsgemäßen Verfahrens werden die Schwingungsbewegungen des MEMS-Spiegels in den Schritten A und B derart gesteuert und wird der MEMS-Spiegel im Schritt C1 derart beleuchtet, dass zumindest eine erste Gruppe von sich im Wesentlichen parallel zueinander erstreckenden ausgeleuchteten Trajektorienabschnitten eine erste Bildaufbaurichtung aufweist und eine zweite Gruppe von sich im Wesentlichen parallel zueinander erstreckenden ausgeleuchteten Trajektorienabschnitten eine zweite Bildaufbaurichtung aufweist, wobei die erste Bildaufbaurichtung und die zweite Bildaufbaurichtung im Wesentlichen parallel und entgegengesetzt zueinander ausgerichtet sind, wobei innerhalb von mindestens 50%, vorzugsweise mindestens 75%, desjenigen Sichtfeldanteils, auf dem das Bild projiziert wird, jedes Paar ausgeleuchteter und unmittelbar benachbarter und im Wesentlichen parallel zueinander erstreckender Trajektorienabschnitte einen Trajektorienabschnitt umfasst, welcher der ersten Gruppe zugeordnet ist, und einen Trajektorienabschnitt umfasst, welcher der zweiten Gruppe zugeordnet ist. Dies ermöglicht einen äußerst Energie-effizienten Bildaufbau und gleichzeitig eine sehr gute Wahrnehmung des Bildaufbaus durch das menschliche Auge.

Gemäß einer Ausführungsform des erfindungsgemäßen Verfahrens werden die Schwingungsbewegungen des MEMS-Spiegels in den Schritten A und B derart gesteuert und wird der MEMS-Spiegel im Schritt C1 derart beleuchtet, dass zusätzlich eine dritte Gruppe von sich im Wesentlichen parallel zueinander erstreckenden ausgeleuchteten Trajektorienabschnitten eine dritte Bildaufbaurichtung aufweist und eine vierte Gruppe von sich im Wesentlichen parallel zueinander erstreckenden ausgeleuchteten Trajektorienabschnitten eine vierte Bildaufbaurichtung aufweist, wobei die dritte Bildaufbaurichtung und die vierte Bildaufbaurichtung im Wesentlichen parallel und entgegengesetzt zueinander ausgerichtet sind, wobei die erste Bildaufbaurichtung und die zweite Bildaufbaurichtung jeweils nicht im Wesentlichen parallel zur dritten und vierten Bildaufbaurichtung ausgerichtet sind, wobei innerhalb von mindestens 50%, vorzugsweise mindestens 75%, desjenigen Sichtfeldanteils, auf dem das Bild projiziert wird, jedes Quartett ausgeleuchteter, unmittelbar benachbarter und eine gedachte Raute umschließender Trajektorienabschnitte einen Trajektorienabschnitt umfasst, welcher der ersten Gruppe zugeordnet ist, und einen Trajektorienabschnitt umfasst, welcher der zweiten Gruppe zugeordnet ist, und einen Trajektorienabschnitt umfasst, welcher der dritten Gruppe zugeordnet ist und einen Trajektorienabschnitt umfasst, welcher der vierten Gruppe zugeordnet ist. Dies hat sich als im besonderen Maße Energie-effizient herausgestellt.

Gemäß einer Ausführungsform des erfindungsgemäßen Verfahrens werden die Schwingungsbewegungen des MEMS-Spiegels in den Schritten A und B derart gesteuert und wird der MEMS-Spiegel im Schritt C1 derart beleuchtet oder im Schritt C2 das vom MEMS-Spiegel reflektierte Licht derart erfasst, dass innerhalb von mindestens 50%, vorzugsweise mindestens 75%, desjenigen Sichtfeldanteils, auf dem das Bild projiziert wird, die Trajektorienabschnitte der ersten Gruppe der ersten Bildaufbaurichtung folgend ausgeleuchtet werden mit einer gruppeninternen Bildaufbaugeschwindigkeit von mindestens 900 Grad pro Sekunde, vorzugsweise mindestens 1200 Grad pro Sekunde und besonders bevorzugt mindestens 1500 Grad pro Sekunde, wobei in mindestens 50%, vorzugsweise 75%, desjenigen Sichtfeldanteils, auf dem das Bild projiziert wird, die Trajektorienabschnitte der zweiten Gruppe der zweiten Bildaufbaurichtung folgend ausgeleuchtet werden mit einer gruppeninternen Bildaufbaugeschwindigkeit von mindestens 900 Grad pro Sekunde, vorzugsweise mindestens 1200 Grad pro Sekunde und besonders bevorzugt mindestens 1500 Grad pro Sekunde. Hierdurch wird ein flimmerfreier Bildaufbau garantiert und gleichzeitig die Energie-Effizienz des geschachtelten Bildaufbaus mittels mehrerer Bildaufbaurichtungen genutzt. Falls auch eine dritte und vierte Gruppe für den Bildaufbau genutzt wird, werden gemäß einer weiteren Ausführungsform des erfindungsgemäßen Verfahrens die Schwingungsbewegungen des MEMS-Spiegels in den Schritten A und B derart gesteuert und wird der MEMS-Spiegel im Schritt C1 derart beleuchtet oder im Schritt C2 das vom MEMS-Spiegel reflektierte Licht derart erfasst, dass innerhalb von mindestens 50%, vorzugsweise mindestens 75%, desjenigen Sichtfeldanteils, auf dem das Bild projiziert wird, auch die Trajektorienabschnitte der dritten Gruppe der dritten Bildaufbaurichtung folgend ausgeleuchtet werden mit einer gruppeninternen Bildaufbaugeschwindigkeit von mindestens 900 Grad pro Sekunde, vorzugsweise mindestens 1200 Grad pro Sekunde und besonders bevorzugt mindestens 1500 Grad pro Sekunde, und dass in mindestens 50%, vorzugsweise 75%, desjenigen Sichtfeldanteils, auf dem das Bild projiziert wird, die Trajektorienabschnitte der vierten Gruppe der vierten Bildaufbaurichtung folgend ausgeleuchtet werden mit einer gruppeninternen Bildaufbaugeschwindigkeit von mindestens 900 Grad pro Sekunde, vorzugsweise mindestens 1200 Grad pro Sekunde und besonders bevorzugt mindestens 1500 Grad pro Sekunde.

Gemäß einer Ausführungsform des erfindungsgemäßen Verfahrens werden die Schwingungsbewegungen des MEMS-Spiegels in den Schritten A und B derart gesteuert und wird der MEMS-Spiegel im Schritt C1 derart beleuchtet oder im Schritt C2 das vom MEMS-Spiegel reflektierte Licht derart erfasst, dass in mindestens 25%, vorzugsweise mindestens 50%, desjenigen Sichtfeldanteils, auf dem das Bild projiziert wird, zeitlich betrachtet immer zunächst die Trajektorienabschnitte der ersten Gruppe und erst danach die Trajektorienabschnitte der zweiten Gruppe ausgeleuchtet werden. Dies geht mit sehr guten Wahrnehmungs-Eigenschaften einher.

Gemäß einer Ausführungsform des erfindungsgemäßen Verfahrens werden die Schwingungsbewegungen des MEMS-Spiegels in den Schritten A und B derart gesteuert und wird der MEMS-Spiegel im Schritt C1) derart beleuchtet oder im Schritt C2) das vom MEMS-Spiegel reflektierte Licht derart erfasst, dass zumindest zwei sich parallel zueinander erstreckende und unmittelbar benachbarte Trajektorienabschnitte dieselbe Bildaufbaurichtung aufweisen. Auch dieses Verfahren kann optional mittels Zeilensprungverfahren erfolgen, sodass die beiden dabei verwendeten und verschachtelten Gruppen von Trajektorienabschnitten dieselbe Bildaufbaurichtungen aufweisen.

Gemäß einer Ausführungsform des erfindungsgemäßen Verfahrens werden die Schwingungsbewegungen des MEMS-Spiegels in den Schritten A und B derart gesteuert und wird der MEMS-Spiegel im Schritt C1 derart beleuchtet oder im Schritt C2 das vom MEMS-Spiegel reflektierte Licht derart erfasst, dass ein Abschnitt des vom Betrachter wahrnehmbaren Sichtfelds entlang mehrerer unterschiedlicher Bildaufbaurichtungen ausgeleuchtet bzw. erfasst wird.

Gemäß einer Ausführungsform des erfindungsgemäßen Verfahrens werden vorzugsweise die Schwingungsbewegungen des MEMS-Spiegels in den Schritten A und B derart gesteuert und wird der MEMS-Spiegel im Schritt C1 derart beleuchtet oder im Schritt C2 das vom MEMS-Spiegel reflektierte Licht derart erfasst, dass ein erster Sichtfeldabschnitt entlang einer ersten Bildaufbaurichtungen und ein sich vom ersten Sichtfeldabschnitt unterscheidender zweiter Sichtfeldabschnitt entlang einer zweiten sich von der ersten Bildaufbaurichtung unterscheidenden Bildaufbaurichtung ausgeleuchtet bzw. erfasst wird.

Gemäß einer bevorzugten Ausführungsform des erfindungsgemäßen Verfahrens werden die Schwingungsbewegungen des MEMS-Spiegels in den Schritten A und B derart gesteuert und wird der MEMS-Spiegel im Schritt C1 derart beleuchtet oder im Schritt C2 das vom MEMS-Spiegel reflektierte Licht derart erfasst, dass ein Abschnitt des vom Betrachter wahrnehmbaren Sichtfelds entlang mindestens zweier unterschiedlicher Bildaufbaurichtungen überlagert ausgeleuchtet bzw. erfasst wird.

Gemäß einer Ausführungsform des erfindungsgemäßen Verfahrens werden die Schwingungsbewegungen des MEMS-Spiegels in den Schritten A und B derart gesteuert und wird der MEMS-Spiegel im Schritt C1 derart beleuchtet oder im Schritt C2 das vom MEMS-Spiegel reflektierte Licht derart erfasst, dass ein Abschnitt des vom Betrachter wahrnehmbaren Sichtfelds entlang genau zweier unterschiedlicher Bildaufbaurichtungen überlagert ausgeleuchtet bzw. erfasst wird.

Gemäß einer hierzu alternativen Ausführungsform des erfindungsgemäßen Verfahrens werden die Schwingungsbewegungen des MEMS-Spiegels in den Schritten A und B derart gesteuert und wird der MEMS-Spiegel im Schritt C1 derart beleuchtet oder im Schritt C2 das vom MEMS-Spiegel reflektierte Licht derart erfasst, dass ein Abschnitt des vom Betrachter wahrnehmbaren Sichtfelds entlang genau von vier unterschiedlichen Bildaufbaurichtungen überlagert ausgeleuchtet bzw. erfasst wird.

Gemäß einer Ausführungsform des erfindungsgemäßen Verfahrens werden die erste Antriebsfrequenz FR1 und die zweite Antriebsfrequenz FR2 derart eingestellt, dass die Summe $S = FR1 +$ FR2 mindestens 15 kHz, vorzugsweise mindestens 45 kHz und besonders bevorzugt mindestens 60 kHz beträgt. Insbesondere können die erste Antriebsfrequenz FR1 und die zweite Antriebsfrequenz FR2 derart eingestellt sein, dass die SummeS kleiner als 250 kHz ist. Es hat sich gezeigt, dass mit derartigen Frequenzsummen stabile und gut wahrnehmbare Projektionen realisiert werden können Gemäß einer Ausführungsform des erfindungsgemäßen Verfahrens werden die Schwingungsbewegungen des MEMS-Spiegels in den Schritten A und B derart geregelt, dass das bezüglich der ersten Schwingungsachse vom MEMS-Spiegel abtastbare und für einen Betrachter wahrnehmbare Sichtfeld im Bildwinkel eine Größe von mindestens 5 Grad und maximal 120 Grad, vorzugsweise mindestens 8 Grad und maximal 90 Grad und besonders bevorzugt mindestens 10 Grad und maximal 60 Grad aufweist. Gemäß einer Ausführungsform des erfindungsgemäßen Verfahrens werden die Schwingungsbewegungen des MEMS-Spiegels in den Schritten A und B derart geregelt, dass das bezüglich der zweiten Schwingungsachsevom MEMS-Spiegel abtastbare und für einen Betrachter wahrnehmbare Sichtfeld im Bildwinkel eine Größe von mindestens 5 Grad und maximal 120 Grad, vorzugsweise mindestens 8 Grad und maximal 90 Grad und besonders bevorzugt mindestens 10 Grad und maximal 60 Grad aufweist. Entsprechend dimensionierte Sichtfelder haben sich in Verbindung mit dem erfindungsgemäßen Verfahren als besonders vorteilhaft für die Wahrnehmung durch das menschliche Auge erwiesen, wenn bei der Projektion eine Bildes ein Großteil des Sichtfeldes ausgeleuchtet wird.

Die der Erfindung zugrunde liegende Aufgabe wird auch gelöst durch eine Regelvorrichtung für die Regelung einer einen MEMS-Spiegel umfassenden MEMS-Spiegel-Anordnung, wobei der MEMS-Spiegel bezüglicher einer ersten Schwingungsachse L1 und einer nicht parallel zur ersten Schwingungsachse L1 ausgerichteten zweiten Schwingungsachsen L2 schwingfähig gelagert ist, wobei die Regelvorrichtung derart ausgebildet und/oder eingerichtet ist, dass mit der Regelvorrichtung eine erste Antriebsfrequenz FR1 der Schwingungsbewegung des MEMS-Spiegels bezüglich der ersten Schwingungsachse L1 steuerbar ist, um eine vordefinierte Regelgröße zu regeln, wobei die Regelvorrichtung derart ausgebildet und/oder eingerichtet ist, dass mit der Regelvorrichtung eine zweite Antriebsfrequenz FR2 der Schwingungsbewegung des MEMS-Spiegels bezüglich der zweiten Schwingungsachse L2 steuerbar ist, um die vordefinierte Regelgröße oder eine weitere vordefinierte Regelgröße zu regeln, wobei die erste Schwingungsachse L1 und die zweite Schwingungsachse L2 derart definiert sind, dass die erste Antriebsfrequenz FR1 kleiner ist als die zweite Antriebsfrequenz FR2, wobei die Regelvorrichtung derart ausgebebildet und/oder eingerichtet ist, dass die Regelvorrichtung die Schwingungsbewegungen des MEMS-Spiegels mit einem Verfahren gemäß einer der zuvor beschriebenen Ausführungsformen erfindungsgemäßer Verfahren regelt.

Die der Erfindung zugrunde liegende Aufgabe wird auch gelöst durch eine Regelvorrichtung für die Regelung einer einen MEMS-Spiegel umfassenden MEMS-Spiegel-Anordnung, wobei der MEMS-Spiegel bezüglicher einer ersten Schwingungsachse L1 und einer nicht parallel zur ersten Schwingungsachse ausgerichteten zweiten Schwingungsachse L2 schwingfähig lagerbar ist, insbesondere eine Regelvorrichtung wie obenstehend beschrieben, wobei die Regelvorrichtung derart ausgebildet und/oder eingerichtet ist, dass mit der Regelvorrichtung eine erste Antriebsfrequenz FR1 der Schwingungsbewegung des MEMS-Spiegels bezüglich der ersten Schwingungsachse L1 steuerbar ist, wobei die Regelvorrichtung derart ausgebildet und/oder eingerichtet ist, dass mit der Regelvorrichtung eine zweite Antriebsfrequenz der Schwingungsbewegung des MEMS-Spiegels bezüglich der zweiten Schwingungsachse L2 steuerbar ist, wobei die Regelvorrichtung derart ausgebildet und/oder eingerichtet ist, dass die Regelvorrichtung zumindest eine Regelgröße wie zum Beispiel die Größe des mit dem MEMS-Spiegel potentiell abtastbaren Sichtfelds empfängt oder ausliest, wobei die Regelvorrichtung derart ausgebildet und/oder eingerichtet ist, dass sie die erste Antriebsfrequenz FR1 und die zweite Antriebsfrequenz FR2 im Regelbetrieb des MEMS-Spiegels in Abhängigkeit von der Regelgröße steuert, um die Regelgröße innerhalb eines Toleranzintervalls zu regeln.

Insbesondere kann die Regelvorrichtung zusätzlich derart ausgebildet und/oder eingerichtet sein, dass sie ein erste Antriebsspannung U1 eines ersten Antriebssignals des MEMS-Spiegels und/oder eine zweite Antriebsspannung U2 eines zweiten Antriebssignals des MEMS-Spiegels steuert. Die Antriebsspannungen U1 und U2 sind dann neben den Antriebsfrequenzen FR1 und FR2 ebenfalls Steuergrößen. Gemäß einer Ausführungsform der erfindungsgemäßen Regelvorrichtung ist die Regelvorrichtung derart ausgebildet und/oder eingerichtet, dass die zu regelnde Regelgröße die abtastbare Trajektorie des MEMS-Spiegels und/oder die Größe LPS und/oder die Größe des vom Betrachter wahrnehmbaren Sichtfeldes und/oder die Position des vom Betrachter wahrnehmbaren Sichtfeldes ist. Die Regelvorrichtungen kann dabei derart ausgebildet und/oder eingerichtet sein, dass sie in Abhängigkeit von den Soll-Werten oder Soll-Bereichen der Regelgrößen hinterlegte Arbeitspunkte in Form von Frequenzpaarungen für die Steuerung der ersten und zweiten Antriebsfrequenz FR1 und FR2 bereitstellt und die Antriebsfrequenzen FR1 und FR2 entsprechend einstellt.

Die der Erfindung zugrunde liegende Aufgabe wird auch gelöst durch eine MEMS-Spiegel-Anordnung, wobei die MEMS-Spiegel-Anordnung derart ausgebildet ist, dass eine im Wesentlichen resonante Schwingungsbewegung des MEMS-Spiegels bezüglich einer ersten Schwingungsachse L1 antreibbar ist, wobei die MEMS-Spiegel-Anordnung derart ausgebildet ist, dass eine im Wesentlichen resonante Schwingungsbewegung des MEMS-Spiegels bezüglich einer zweiten Schwingungsachse L2 antreibbar ist, wobei die MEMS-Spiegel-Anordnung derart ausgebildet ist, dass die erste Schwingungsachse L1 und die zweite Schwingungsachse L2 nicht parallel zueinander ausgebildet sind und dass die erste Schwingungsachse L1 und die zweite Schwingungsachse L2 im Wesentlichen parallel zu einer Spiegelebene des MEMS-Spiegels ausgerichtet sind, wobei die MEMS-Spiegel-Anordnung derart ausgebildet ist, dass die im Wesentlichen resonante Schwingungsbewegung bezüglich der ersten Schwingungsachse L1 bei einer ersten Antriebsfrequenz FR1 antreibbar ist, wobei die MEMS-Spiegel-Anordnung derart ausgebildet ist, dass die im Wesentlichen resonante Schwingungsbewegung bezüglich der zweiten Schwingungsachse L2 bei einer zweiten Antriebsfrequenz FR2 antreibbar ist, wobei die erste Schwingungsachse L1 und die zweite Schwingungsachse L2 derart definiert sind, dass die erste Antriebsfrequenz FR1 kleiner ist als die zweite Antriebsfrequenz FR2. Die Vorteile dieser Anordnung ergeben sich analog zum parallel formulierten Verfahrensgegenstand.

Gemäß einer Ausführungsform der erfindungsgemäßen MEMS-Spiegel-Anordnung ist die MEMS-Spiegel-Anordnung derart ausgebildet, dass der Quotient, der sich aus der ersten Antriebsfrequenz FR1 als Dividend und der zweiten Antriebsfrequenz FR2 als Divisor ergibt, in einem Regelbetrieb kleiner 0,5000 oder gleich 0,5000 ist

Gemäß einer Ausführungsform der erfindungsgemäßen MEMS-Spiegel-Anordnung ist die MEMS-Spiegel-Anordnung derart ausgebildet, dass der Quotient, der sich aus der ersten Antriebsfrequenz FR1 als Dividend und der zweiten Antriebsfrequenz FR2 als Divisor ergibt, größer als 0,0500 und kleiner als 0,4878, vorzugsweise größer als 0,0500 und kleiner als 0,4800 besonders bevorzugt größer als 0,0500 und kleiner als 0,4500 ist.

Gemäß einer Ausführungsform der erfindungsgemäßen MEMS-Spiegel-Anordnung ist die MEMS-Spiegel-Anordnung derart ausgebildet, dass der Quotient, der sich aus der ersten Antriebsfrequenz FR1 als Dividend und der zweiten Antriebsfrequenz FR2 als Divisor ergibt, aus einem geschlossenen Quotient-Intervall ausgewählt ist aus der Gruppe von Quotient-Intervallen bestehend aus: [0,0001; 0,0063], [0,1225; 0,1259], [0,1232; 0,1260], [0,1240; 0,1268], [0,1241; 0,1274], [0,1402; 0,1438], [0,1410; 0,1438], [0,1419; 0,1448], [0,1419; 0,1456], [0,1636; 0,1675], [0,1646; 0,1676], [0,1657; 0,1687], [0,1658; 0,1697], [0,1966; 0,2009], [0,1977; 0,2010], [0,1990; 0,2023], [0,1991; 0,2035], [0,2458; 0,2508], [0,2473; 0,2509], [0,2491; 0,2527], [0,2492; 0,2542], [0,2828; 0,2865], [0,2837; 0,2867], [0,2847; 0,2877], [0,2848; 0,2886], [0,3276; 0,3340], [0,3300; 0,3342], [0,3325; 0,3367], [0,3326; 0,3390], [0,3722; 0,3759], [0,3732; 0,3760], [0,3740; 0,3768], [0,3741; 0,3778], [0,3961; 0,4008], [0,3975; 0,4009], [0,3991; 0,4025], [0,3992; 0,4039], [0,4255; 0,4295], [0,4265; 0,4295], [0,4276; 0,4307], [0,4277; 0,4317], [0,4911; 0,4999] und [0,4950; 0,4999].

Insbesondere und gemäß einer Ausführungsform der erfindungsgemäßen MEMS-Spiegel-Anordnung ist die MEMS-Spiegel-Anordnung derart ausgebildet, dass der Quotient, der sich aus der ersten Antriebsfrequenz FR1 als Dividend und der zweiten Antriebsfrequenz FR2 als Divisor ergibt, aus dem geschlossenen Quotient-Intervall [0,4911; 0,4999], bevorzugt aus dem geschlossenen Intervall [0,4950; 0,4999] und besonders bevorzugt aus dem geschlossenen Intervall [0,4989; 0,4994] ausgewählt ist. Hierdurch ergeben sich besonders gute Wahrnehmungseigenschaften.

Gemäß einer Ausführungsform der erfindungsgemäßen MEMS-Spiegel-Anordnung ist die MEMS-Spiegel-Anordnung derart ausgebildet, dass der Quotient, der sich aus der ersten Antriebsfrequenz FR1 als Dividend und der zweiten Antriebsfrequenz FR2 als Divisor ergibt, aus dem geschlossenen Quotienten-Intervall [0,0001; 0,0116] ausgewählt ist.

Gemäß einer Ausführungsform der erfindungsgemäßen MEMS-Spiegel-Anordnung ist die MEMS-Spiegel-Anordnung derart ausgebildet und eingerichtet, dass bei einem resonanten Antreiben der beiden Schwingungsbewegungen mit der ersten Antriebsfrequenz FR1 und der zweiten Antriebsfrequenz FR2 und mit einem gedachten auf dem MEMS-Spiegel reflektierten permanenten Lichtbündel in einem von einem Betrachter wahrnehmbaren Sichtfeld in einem Zeitraum (1/LPS) genau eine geschlossene Lissajous-Figurabgetastet wird, wobei die MEMS-Spiegel-Anordnung derart ausgebildet und eingerichtet ist, dass in dem Zeitraum (1/LPS) mehr als 10 Prozent, vorzugsweise mehr als 15 Prozent und besonders bevorzugt mehr als 25 Prozent der geschlossenen Lissajous-Figur mit einem tatsächlichen auf dem MEMS-Spiegel reflektierten Lichtbündel ausleuchtbar ist. Insbesondere kann die MEMS-Spiegel-Anordnung zusätzlich derart ausgebildet sein, dass in dem Zeitraum (1/LPS) weniger als 100 Prozent, vorzugsweise weniger als 95 Prozent und besonders bevorzugt weniger als 90 Prozent der geschlossenen Lissajous-Figur mit einem tatsächlichen auf dem MEMS-Spiegel reflektierten Lichtbündel ausleuchtbar ist.

Gemäß einer Ausführungsform der erfindungsgemäßen MEMS-Spiegel-Anordnung ist die MEMS-Spiegel-Anordnung derart ausgebildet und eingerichtet, dass in einem vom Betrachter wahrnehmbaren Sichtfeld ein Bild zumindest abschnittsweise entlang einer ersten Bildaufbaurichtung projizierbar oder erfassbar ist, wobei die erste Bildaufbaurichtung zu einer Mehrzahl von ausleuchtbaren Trajektorienabschnitten im Wesentlichen senkrecht ausgerichtet ist, wobei sich die Mehrzahl von Trajektorienabschnitten in Richtung der ersten Bildaufbaurichtung im Wesentlichen parallel zueinander erstrecken und der ersten Bildaufbaurichtung folgend ausleuchtbar bzw. erfassbar sind. In Teilbereichen des Sichtfeldes sind die zur Mehrzahl von Trajektorienabschnitten zugehörigen ausleuchtbaren Trajektorienabschnitte der ersten Bildaufbaurichtung folgend zeitlich nacheinander ausleuchtbar bzw. erfassbar.

Gemäß einer Ausführungsform der erfindungsgemäßen MEMS-Spiegel-Anordnung ist die MEMS-Spiegel-Anordnung derart ausgebildet und eingerichtet, dass zumindest zwei sich im Wesentlichen parallel zueinander erstreckende, unmittelbar benachbarte und ausleuchtbare Trajektorienabschnitte jeweils eine Bildaufbaurichtung aufweisen, die der Bildaufbaurichtung des jeweils anderen Trajektorienabschnitt entgegengesetzt ist. Dies ermöglicht einen Energie-effizienten Betrieb der Anordnung.

Gemäß einer Ausführungsform der erfindungsgemäßen MEMS-Spiegel-Anordnung ist die MEMS-Spiegel-Anordnung derart ausgebildet und eingerichtet, dass ein erster ausleuchtbarer Trajektorienabschnitt eine erste Bildaufbaurichtung aufweist, ein zweiter ausleuchtbarer Trajektorienabschnitt eine zweite Bildaufbaurichtung aufweist, ein dritter ausleuchtbarer Trajektorienabschnitt eine dritte Bildaufbaurichtung aufweist und ein vierter ausleuchtbarer Trajektorienabschnitt eine vierte Bildaufbaurichtung aufweist, wobei die MEMS-Spiegel-Anordnung derart ausgebildet und eingerichtet ist, dass sich der erste ausleuchtbare Trajektorienabschnitt und der zweite ausleuchtbare Trajektorienabschnitt im Wesentlichen parallel zueinander erstrecken, wobei die MEMS-Spiegel-Anordnung derart ausgebildet und eingerichtet ist, dass sich der dritte ausleuchtbare Trajektorienabschnitt und der vierte ausleuchtbare Trajektorienabschnitt im Wesentlichen parallel zueinander erstrecken, wobei die MEMS-Spiegel-Anordnung derart ausgebildet und eingerichtet ist, dass die erste Bildaufbaurichtung und die zweite Bildaufbaurichtung im Wesentlichen parallel aber entgegengesetzt zueinander ausgerichtet sind, wobei die MEMS-Spiegel-Anordnung derart ausgebildet und eingerichtet ist, dass die dritte und die vierte Bildaufbaurichtung im Wesentlichen parallel aber entgegengesetzt zueinander ausgerichtet sind, sodass die erste und die zweite Bildaufbaurichtung sich jeweils nicht parallel zur dritten und vierten Bildaufbaurichtung ausgerichtet sind. Dies ermöglicht die Nutzung aller vier möglichen Bildaufbaurichtungen und somit einen Energie-effizienten Betrieb der MEMS-Spiegel-Anordnung. Gemäß einer weiteren Ausführungsform der erfindungsgemäßen MEMS-Spiegel-Anordnung ist die MEMS-Spiegel-Anordnung derart ausgebildet und eingerichtet ist, dass sich der erste ausleuchtbare Trajektorienabschnitt und der dritte ausleuchtbare Trajektorienabschnitt schneiden, vorzugsweise mit einem Schnittwinkel ungleich 90 Grad schneiden, und dass sich der zweite ausleuchtbare Trajektorienabschnitt und der vierte ausleuchtbare Trajektorienabschnitt schneiden, vorzugsweise mit einem Schnittwinkel ungleich 90 Grad schneiden.

Gemäß einer Ausführungsform der erfindungsgemäßen MEMS-Spiegel-Anordnung ist die MEMS-Spiegel-Anordnung derart ausgebildet und eingerichtet, dass eine erste Gruppe von sich im Wesentlichen parallel zueinander erstreckenden ausleuchtbaren Trajektorienabschnitten eine erste Bildaufbaurichtung aufweist und eine zweite Gruppe von sich im Wesentlichen parallel zueinander erstreckenden ausleuchtbaren Trajektorienabschnitten eine zweite Bildaufbaurichtung aufweist, wobei die erste Bildaufbaurichtung und die zweite Bildaufbaurichtung im Wesentlichen parallel und entgegengesetzt zueinander ausgerichtet sind, wobei in einem Bereich des wahrnehmbaren Sichtfeldes mit einer Größe von mindestens 50%, vorzugsweise mindestens 75%, des gesamten vom Betrachter wahrnehmbaren Sichtfeldes jedes Paar unmittelbar benachbarter und im Wesentlichen parallel zueinander erstreckender ausleuchtbarer Trajektorienabschnitte einen Trajektorienabschnitt umfasst, welcher der ersten Gruppe zugeordnet ist, und einen Trajektorienabschnitt umfasst, welcher der zweiten Gruppe zugeordnet ist. Dies ermöglicht einen besonders Energie-effizienten Betrieb der Anordnung.

Gemäß einer Ausführungsform der erfindungsgemäßen MEMS-Spiegel-Anordnung ist die MEMS-Spiegel-Anordnung derart ausgebildet und eingerichtet, dass in mindestens 50%, vorzugsweise mindestens 75%, des gesamten vom Betrachter wahrnehmbaren Sichtfeldes, zeitlich betrachtet immer zunächst die Trajektorienabschnitte der ersten Gruppe und erst danach die Trajektorienabschnitte der zweiten Gruppe ausleuchtbar sind. Dies ermöglicht einen äußerst flimmerfreien Bildaufbau bei gleichzeitig guter Energie-Effizienz im Betrieb der Anordnung.

Gemäß einer Ausführungsform der erfindungsgemäßen MEMS-Spiegel-Anordnung ist die MEMS-Spiegel-Anordnung derart ausgebildet und eingerichtet, dass zusätzlich eine dritte Gruppe von sich im Wesentlichen parallel zueinander erstreckenden ausleuchtbaren Trajektorienabschnitten eine dritte Bildaufbaurichtung aufweist und eine vierte Gruppe von sich im Wesentlichen parallel zueinander erstreckenden ausleuchtbaren Trajektorienabschnitten eine vierte Bildaufbaurichtung aufweist, wobei die MEMS-Spiegel-Anordnung derart ausgebildet und eingerichtet ist, dass die dritte Bildaufbaurichtung und die vierte Bildaufbaurichtung im Wesentlichen parallel und entgegengesetzt zueinander ausgerichtet sind, wobei die MEMS-Spiegel-Anordnung derart ausgebildet und eingerichtet ist, dass die erste Bildaufbaurichtung und die zweite Bildaufbaurichtung jeweils nicht im Wesentlichen parallel zur dritten und vierten Bildaufbaurichtung ausgerichtet sind, wobei die MEMS-Spiegel-Anordnung derart ausgebildet und eingerichtet ist, dass in einem Bereich des wahrnehmbaren Sichtfeldes mit einer Größe von mindestens 50%, vorzugsweise mindestens 75%, des gesamten vom Betrachter wahrnehmbaren Sichtfeldes, jedes Quartett ausleuchtbarer, unmittelbar benachbarter und eine gedachte Raute umschließender Trajektorienabschnitte einen Trajektorienabschnitt umfasst, welcher der ersten Gruppe zugeordnet ist, und einen Trajektorienabschnitt umfasst, welcher der zweiten Gruppe zugeordnet ist, und einen Trajektorienabschnitt umfasst, welcher der dritten Gruppe zugeordnet ist und einen Trajektorienabschnitt umfasst, welcher der vierten Gruppe zugeordnet ist. Hierdurch wird ein Energie-effizienter Betrieb garantiert.

Gemäß einer Ausführungsform der erfindungsgemäßen MEMS-Spiegel-Anordnung ist die MEMS-Spiegel-Anordnung derart ausgebildet und eingerichtet, dass die Trajektorienabschnitte der ersten Gruppe der ersten Bildaufbaurichtung folgend ausleuchtbar sind mit einer potentiellen Bildaufbaugeschwindigkeit von mindestens 900 Grad pro Sekunde, vorzugsweise mindestens 1200 Grad pro Sekunde und besonders bevorzugt mindestens 1500 Grad pro Sekunde, und wobei die MEMS-Spiegel-Anordnung derart ausgebildet und eingerichtet ist, dass die Trajektorienabschnitte der zweiten Gruppe der zweiten Bildaufbaurichtung folgend ausleuchtbar sind mit einer potentiellen Bildaufbaugeschwindigkeit von mindestens 900 Grad pro Sekunde, vorzugsweise mindestens 1200 Grad pro Sekunde und besonders bevorzugt mindestens 1500 Grad pro Sekunde. Dies ermöglicht einen äußerst flimmerfreien Bildaufbau bei gleichzeitig sehr guter Energie-Effizienz im Betrieb der Anordnung. Falls auch eine dritte und vierte Gruppe vorhanden ist, ist gemäß einer weiteren Ausführungsform der erfindungsgemäßen MEMS-Spiegel-Anordnung die MEMS-Spiegel-Anordnung derart ausgebildet und eingerichtet, dass auch die Trajektorienabschnitte der dritten Gruppe der dritten Bildaufbaurichtung folgend ausleuchtbar sind mit einer potentiellen Bildaufbaugeschwindigkeit von mindestens 900 Grad pro Sekunde, vorzugsweise mindestens 1200 Grad pro Sekunde und besonders bevorzugt mindestens 1500 Grad pro Sekunde, und die MEMS-Spiegel-Anordnung auch derart ausgebildet und eingerichtet ist, dass die Trajektorienabschnitte der vierten Gruppe der vierten Bildaufbaurichtung folgend ausleuchtbar sind mit einer potentiellen Bildaufbaugeschwindigkeit von mindestens 900 Grad pro Sekunde, vorzugsweise mindestens 1200 Grad pro Sekunde und besonders bevorzugt mindestens 1500 Grad pro Sekunde

Im Sinne der vorliegenden Erfindung sind Nummerierungen wie "erste Schwingungsachse" als namensgebend zu verstehen und nicht zwingend als Aufzählung. Der Begriff "erstes Element" oder ein ähnlicher Begriff impliziert nicht zwingend, dass es auch ein "zweites Element" gibt. Auch impliziert der Begriff "zweites Element" oder ein ähnlicher Begriff nicht zwingend, dass es ein entsprechenden "erstes Element" geben muss.

Sofern keine logischen Ausschlüsse benannt sind, bilden auch jede Kombinationen der zuvor beschriebenen Ausführungsformen eines erfindungsgemäßen Verfahrens untereinander bzw. Kombinationen der zuvor beschriebenen Ausführungsformen einer erfindungsgemäßen Regelvorrichtung untereinander bzw. Kombinationen der zuvor beschriebenen Ausführungsformen einer erfindungsgemäßen MEMS-Spiegel-Anordnung untereinander sowie Kombinationen der dazugehörigen Merkmale auch Kategorie-übergreifend weitere Ausführungsformen des erfindungsgemäßen Verfahrens, der erfindungsgemäßen Regelvorrichtung bzw. der erfindungsgemäßen MEMS-Spiegel-Anordnung.

Im Sinne der vorliegenden Erfindung ist unter Licht jede Form elektromagnetischer Strahlung zu verstehen. Licht ist folglich elektromagnetische Strahlung - unabhängig von dessen Wellenlänge. Insbesondere umfasst Licht den sichtbare Spektralanteil elektromagnetischer Strahlung sowie den ultravioletten und infraroten Spektralanteil. Gemäß einer Ausführungsform des erfindungsgemäßen Verfahrens bzw. einer Ausführungsform der erfindungsgemäßen MEMS-Spiegel-Anordnung, sind diese Ausführungsformen für die Verwendung von Licht im sichtbaren Spektralbereich sowie im ultravioletten und infraroten Spektralanteil bestimmt (beim Verfahren) bzw. ausgebildet (bei der MEMS-Spiegel-Anordnung).

Weitere Merkmale, Vorteile und Anwendungsmöglichkeiten der vorliegenden Erfindung werden deutlich anhand der folgenden Beschreibung bevorzugter Ausführungsformen und der dazugehörigen Figuren. Es zeigen:

Fig. 1:  eine schematische Darstellung einer Ausführungsform einer erfindungsgemäßen MEMS-Spiegel-Anordnung,

Fig. 2:  eine schematische Darstellung des von einem menschlichen Betrachter wahrnehmbaren Sichtfelds,

Fig. 3:  eine schematische Darstellung eines von einem Betrachter wahrnehmbaren Sichtfeldes mit einer von einem MEMS-Spiegel abtastbaren Trajektorie,

Fig. 4:  das in Fig. 3 gezeigte Sichtfeld und die in Fig. 3 gezeigte abtastbare Trajektorie mit einer ersten Menge von ausleuchtbaren Trajektorienabschnitten,

Fig. 5:  das in Fig. 3 gezeigte Sichtfeld und die in Fig. 3 gezeigte abtastbare Trajektorie mit einer zweiten Menge von ausleuchtbaren Trajektorienabschnitten,

Fig. 6:  das in Fig. 3 gezeigte Sichtfeld und die in Fig. 3 gezeigte abtastbare Trajektorie mit einer dritten Menge von ausleuchtbaren Trajektorienabschnitten,

Fig. 7:  eine schematische Darstellung eines von einem Betrachter wahrnehmbaren Sichtfeldes mit einer abtastbaren Trajektorie, einer ersten Menge von ausleuchtbaren Trajektorienabschnitten und einer ersten Menge von ausgeleuchteten Trajektorienabschnitten,

Fig. 8:  das in Fig. 7 gezeigte Sichtfeld mit der abtastbaren Trajektorie, einer zweiten Menge von ausleuchtbaren Trajektorienabschnitten und einer zweiten Menge von ausgeleuchteten Trajektorienabschnitten,

Fig. 9: das in Fig. 7 gezeigte Sichtfeld mit der abtastbaren Trajektorie, einer dritten Menge von ausleuchtbaren Trajektorienabschnitten und einer dritten Menge von ausgeleuchteten Trajektorienabschnitten,

Fig. 10: eine schematische Darstellung eines mittigen Ausschnitts eines von einem Betrachter wahrnehmbaren Sichtfeldes mit einer von einem MEMS-Spiegel abtastbaren Trajektorie, einer ersten Menge von ausleuchtbaren Trajektorienabschnitten und einer ersten Menge von ausgeleuchteten Spots,

Fig. 11: der in Fig. 10 gezeigte Ausschnitt eines von einem Betrachter wahrnehmbaren Sichtfeldes mit einer von einem MEMS-Spiegel abtastbaren Trajektorie, einer zweiten Menge von ausleuchtbaren Trajektorienabschnitten und einer zweiten Menge von ausgeleuchteten Spots,

Fig. 12: der in Fig. 10 gezeigte Ausschnitt eines von einem Betrachter wahrnehmbaren Sichtfeldes mit einer von einem MEMS-Spiegel abtastbaren Trajektorie, einer dritten Menge von ausleuchtbaren Trajektorienabschnitten und einer dritten Menge von ausgeleuchteten Spots,

Fig. 13: der in Fig. 10 gezeigte Ausschnitt eines von einem Betrachter wahrnehmbaren Sichtfeldes mit einer von einem MEMS-Spiegel abtastbaren Trajektorie, einer vierten Menge von ausleuchtbaren Trajektorienabschnitten und einer vierten Menge von ausgeleuchteten Spots,

Fig. 14: eine Ausführungsform einer erfindungsgemäßen Regelvorrichtung in einer schematischen Schaltplandarstellung,

Fig. 15: eine Ausführungsform des erfindungsgemäßen Verfahrens.

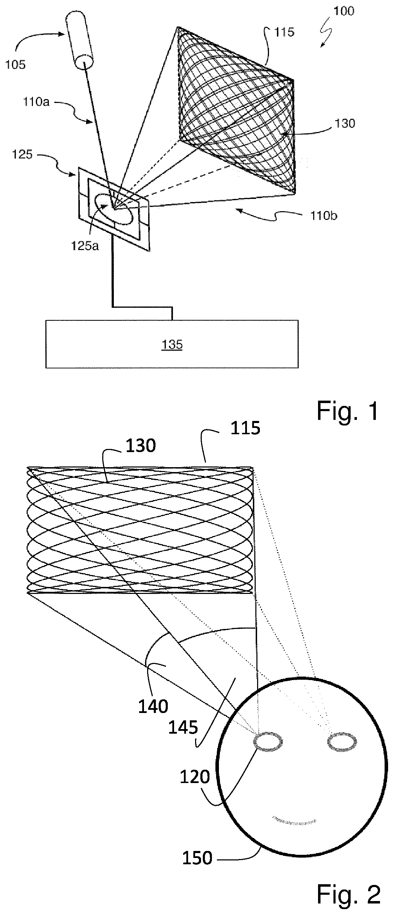

Das Grundkonzept einer Projektion oder eines Erfassens mittels eines bi-resonant angetriebenen MEMS-Spiegels 125a lässt sich gut anhand von Fig. 1 erläutern. Fig. 1 zeigt eine MEMS-Spiegel-Anordnung 100 für die Zwecke eines Projektors.

Der Zweck der hier gezeigten Anordnung 100 ließe sich auch umkehren. Die in Fig. 1 gezeigte Lichtquelle 105 könnte auch ein Licht-Sensor, zum Beispiel eine Fotodiode, sein, sodass die Anordnung einen Detektor darstellen würde. Da die Konzepte von Projektor und Detektor grundsätzlich dieselben sind, werden diese im Folgenden anhand eines Projektors im Detail beschrieben. Bei einem Detektor findet nur eine Umkehr der Strahlungsrichtung statt und die Lichtquelle 105 wird durch einen Sensor ersetzt.

Die in Fig. 1 gezeigte Lichtquelle 105 ist stationär auf den MEMS-Spiegel 125a ausgerichtet und emittiert ein Lichtbündel 110a, welches vom MEMS-Spiegel 125a reflektiert wird und ein reflektiertes Lichtbündel 110b bildet. Die hier gezeigte Darstellung ist nicht beschränkend zu verstehen. Möglich ist auch, dass mehrere separate und parallel zueinander verlaufende Lichtbündel gleichzeitig von einer Lichtquelle emittiert und vom MEMS-Spiegel 125a reflektiert werden.

Der in Fig. 1 gezeigte MEMS-Spiegel 125a wird über einen MEMS-Antriebseinheit 134 und eine hierfür ausgelegte MEMS-Spiegel-Aufhängung 125a bi-resonant angetrieben, d.h. der MEMS-Spiegel 125a wird in eine zwei-dimensionale Schwingung versetzt, die sich aus zwei sich überlagernden und jeweils resonanten Schwingungsbewegungen ergibt, wobei jede der beiden Schwingungsbewegungen bezüglich einer Schwingungsachse ausgebildet ist und diese Schwingungsachsen nicht parallel zueinander ausgerichtet sind. Unter der Annahme, dass die Lichtquelle 105 beständig ein Lichtbündel mit gleichbleibender Helligkeit auf dem MEMS-Spiegel wirft, entsteht durch die Schwingung des MEMS-Spiegels im Sichtfeld 115 des MEMS-Spiegels die in Fig. 1 gezeigte Trajektorie 130.

Das Sichtfeld 115 des MEMS-Spiegels 125a ist im Sinne der vorliegenden Erfindung das für einen menschlichen Betrachter wahrnehmbare Sichtfeld. Dieses korrespondiert in Fig. 1 mit einer Querschnittsfläche, die unmittelbar dem Strahlengang des Projektors folgend hinter dem MEMS-Spiegel 125a angeordnet ist. In der Praxis können zwischen dem für dem Betrachter wahrnehmbaren Sichtfeld 115 und dem MEMS-Spiegel 125a selbst noch zusätzlich optische Elemente, insbesondere wellenleitende Medien, angeordnet sein. Solche Kombinationen sind von der hier erfolgenden Beschreibung umfasst, auch wenn sie nicht explizit gezeigt werden.

Die nun im wahrnehmbaren Sichtfeld 115 projizierte Trajektorie 130 ist genauer die Trajektorie eines Licht-Spots, der aufgrund der Schwingung des MEMS-Spiegels 125a und der damit verbundenen ständigen Lageveränderung des MEMS-Spiegels 125a in Bezug auf das einfallende Lichtbündel, eine mit der Schwingung des MEMS-Spiegels 125a assoziierte Bewegung im Sichtfeld vollführt. Die dabei vom Licht-Spot abgefahrene Trajektorie 130 ist in Fig. 1 gezeigt. Für das Verständnis der vorliegenden Erfindung ist es wichtig, dass der in Fig. 1 gezeigten Trajektorie 130 die Annahme zugrunde liegt, dass die Lichtquelle 105 beständig Licht mit derselben Helligkeit emittiert und die Spotgröße des im Sichtfeld 115 projizierten Lichtspots die Größe eines Punktes besitzt - mit anderen Worten infinitesimal klein ist. Dies ist in der Praxis eines Projektors oftmals mitnichten der Fall. Daher wird die in Fig. 1 gezeigte Trajektorie 130 im Sinne der vorliegenden Erfindung als die vom MEMS-Spiegel 125a abtastbare Trajektorie 130 bezeichnet, das heißt als diejenige Trajektorie eines Licht-Spots, die sich im Sichtfeld 115 ergibt, wenn davon ausgegangen wird, dass die Lichtquelle 105 beständig ein Lichtbündel mit gleichbleibenden Eigenschaften, insbesondere Helligkeit, auf den MEMS-Spiegel 125a wirft.

Die abtastbare Trajektorie 130 kann insbesondere eine Lissajous-Figur darstellen. Sie kann bei entsprechender Regelung des MEMS-Spiegels 125a insbesondere auch über einen längeren Zeitraum, z. B. von mehreren Sekunden, eine geschlossene Lissajous-Figur darstellen, d. h. der gedachte beständige Licht-Spot fährt immer wieder ein und dieselbe Lissajous-Figur ab -zumindest im Rahmen von erlaubten Fehlertoleranzen der zugrundeliegenden Regelung.

Eine derartige abtastbare Trajektorie 130, die eine geschlossene Lissajous-Figur darstellt, ist auch in Fig. 2 gezeigt, und zwar im Sichtfeld eines Beobachters 150, der mit seinen Augen 120 das Sichtfeld 115 wahrnimmt, beispielsweise im Rahmen einer Augmented-Reality-Anwendung (AR-Anwendung). Eine solche Anwendung kann das Tragen einer AR-Brille oder das Fahren eines Fahrzeugs mit Head-up-Display sein. Das Sichtfeld 115 erstreckt sich im hier gezeigten Beispiel über einen Raumwinkel mit einem im Wesentlichen quadratischen Querschnitt. Dieser lässt sich daher äquivalent auch mit einem Vertikalwinkel 140 und einem Horizontalwinkel 145 beschreiben. Bei der Anwendung von AR-Brillen ist ein Sichtfeld 115 mit einer Raumwinkelgröße von 10°(Vertikalwinkel) mal 20° (Horizontalwinkel) bis zu 60°(Vertikalwinkel) mal 90° (Horizontalwinkel) vorteilhaft und gemäß der hier beschriebenen Ausführungsform von der Erfindung umfasst.

Mit entscheidend dafür, wie ein projiziertes Bild von einem menschlichen Auge 120 wahrgenommen wird, ist die Art und Weise, wie das Bild im Sichtfeld 115 des Auges 120 (und damit des menschlichen Betrachters 150) zeitlich betrachtet aufgebaut wird.

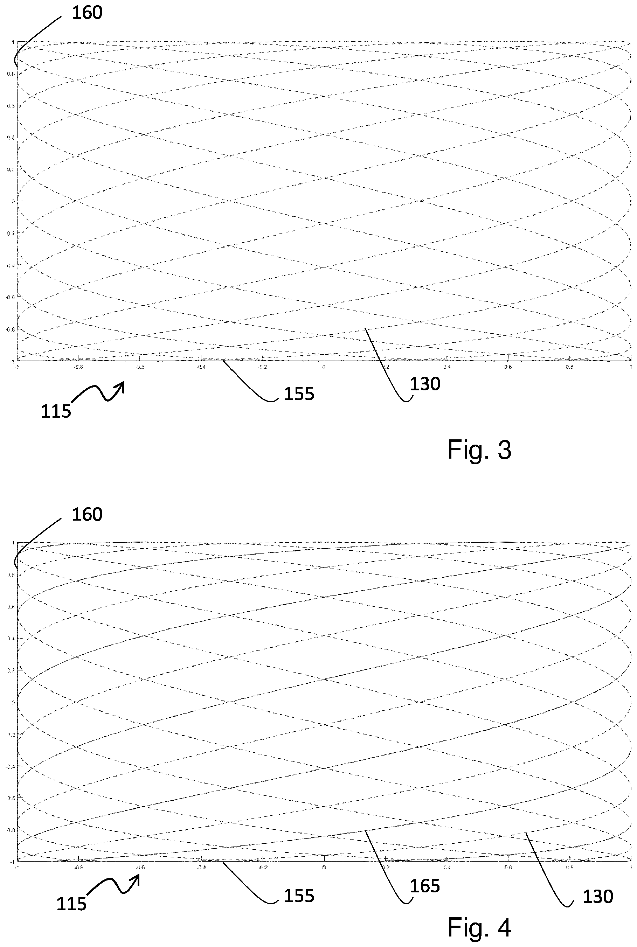

Fig. 3 zeigt nun das in Fig. 2 schematisch gezeigte Sichtfeld 115 und die darin enthaltene abtastbare Trajektorie 130 in einer Frontalansicht, also derart, wie beispielsweise der Träger einer AR-Brille das Sichtfeld wahrnehmen würde. Das Sichtfeld 115 ist dabei in einem Diagramm mit einer Vertikalachse 160 und einer Horizontalachse 155 gezeigt. Die abtastbare Trajektorie 130 definiert alle potentiell möglichen Punkte im Sichtfeld 115, die grundsätzlich zum Projizieren eins Bildes genutzt werden könnten. Der vorliegenden Erfindung liegt nun die Erkenntnis zugrunde, dass einige Nutzungen der abtastbaren Trajektorie 130 zum Ausleuchten eines Bildes besser geeignet sind als andere, wobei die Abhängigkeiten für diesen Vorteil multifaktoriell sind und sich daher mehrere geeignete Nutzungen der abtastbaren Trajektorie 130 ergeben.

Die Figuren 4, 5 und 6 zeigen drei unterschiedliche Nutzungen der abtastbaren Trajektorie 130. Dabei zeigt die gestrichelte Linie die Abschnitte der abtastbare Trajektorie 130, die nicht für das Ausleuchten eines Bildes im Sichtfeld 115 genutzt werden, und die durchgezogene Linien diejenigen Abschnitte der abtastbaren Trajektorie 130, die für das Ausleuchten eines Bildes im Sichtfeld 115 nutzbar sind. Letztere Abschnitte werden im Sinne der vorliegenden Erfindung ausleuchtbare Trajektorienabschnitte 165, 170, 175, 180 genannt. Dies bedeutete, dass MEMS-Spiegel-Anordnungen, die für eine dieser Nutzungen ausgebildet und/oder eingerichtet sind, ausschließlich die ausleuchtbaren Trajektorienabschnitte 165, 170, 175, 180 der abtastbaren Trajektorie 130 nutzen können, um ein Bild im Sichtfeld zu projizieren.

In Fig. 4 sind nur diejenigen Trajektorienabschnitte ausleuchtbar, die je nach Ausrichtung der Abtastrichtung - also je nach Bewegungsrichtung des gedachten dauerhaften Licht-Spots - von unten links nach oben rechts oder von oben rechts nach unten links, abgetastet werden. Das Bild baut sich demnach linienhaft in eine Bildaufbaurichtung auf, die im Wesentlichen senkrecht zu den hier gezeigten ausleuchtbaren Trajektorienabschnitten 165 und daher entweder von oben links nach unten recht oder von unten rechts nach oben links zeigt. Für den in Fig. 4 gezeigten Bildaufbau ist daher charakteristisch, dass er eine einzige Bildaufbaurichtung aufweist. Die Wahl der Trajektorienabschnitte, die hier für die Darstellung dieses Bildaufbautypus verwendet wurde ist nur beispielhaft. Es könnten auch ausschließlich diejenigen Trajektorienabschnitte ausleuchtbar sein, die von oben links nach unten rechts abgetastet werden, oder diejenigen Trajektorienabschnitte ausleuchtbar sein, die von unten links nach oben rechts abgetastet werden, oder diejenigen Trajektorienabschnitte ausleuchtbar sein, die von oben rechts nach unten links abgetastet werden. Entscheidend für den hier gezeigten Bildaufbautypus ist, dass er ausschließlich eine Bildaufbaurichtung aufweist. Dies hat den Vorteil, dass ein besonders flimmerfreies Bild erzeugt werden kann, aber auch den energetischen Nachteil, dass nur ein Bruchteil der zu Verfügung stehenden abtastbaren Trajektorie 130 zum Ausleuchten des Bildes genutzt werden kann.

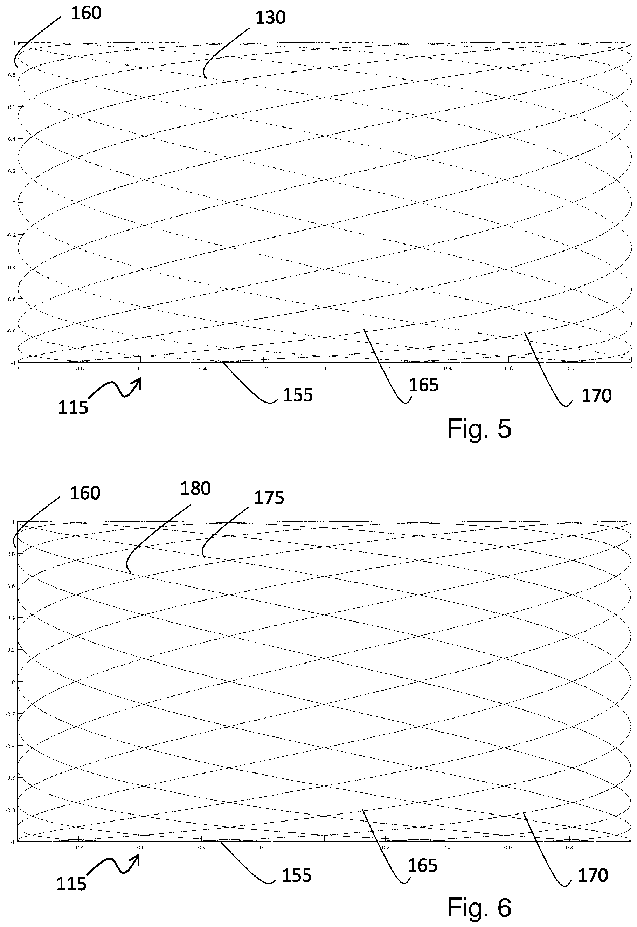

In Fig. 5 ist eine Ausführungsform gezeigt, bei der sowohl diejenigen Trajektorienabschnitte 165 ausleuchtbar sind, die von oben rechts nach unten links abgetastet werden, als auch diejenigen Trajektorienabschnitte 170 ausleuchtbar sind, die von unten links nach oben rechts abgetastet werden. Die zuerst genannte Gruppe von Trajektorienabschnitten 165 bedingt einen linienhaften Bildaufbau, der sich entlang einer Bildaufbaurichtung fortsetzt, die von unten rechts nach oben links zeigt. Die zweit-genannte Gruppe von Trajektorienabschnitten 170 bedingt äquivalent einen linienhaften Bildaufbau, der sich entlang einer entgegengesetzten Bildaufbaurichtung fortsetzt, die von oben links nach unten rechts zeigt. Mit anderen Worten wird das zu projizierende Bild durch zwei Gruppen von in sich verschachtelten Linien (im Sinne von Trajektorienabschnitten) aufgebaut, wobei die Linien der einen Gruppe einer ersten Bildaufbaurichtung folgend aufgebaut werden und die Linien der anderen Gruppe einer zu ersten Bildaufbaurichtung entgegengesetzt ausgerichteten Bildaufbaurichtung folgend aufgebaut werden. Charakteristisch für den hier gezeigten Bildaufbautypus ist, dass er genau zwei zueinander entgegengesetzt ausgerichtete Bildaufbaurichtungen aufweist. Hiermit lassen sich immer noch äußerst flimmerfreie und ruhig anmutende Bildaufbauarten realisieren. Gleichzeitig ist die Energieausbeute der in Fig. 5 gezeigten Ausführungsform deutlich höher gegenüber der in Fig. 4 gezeigten Ausführungsform.

In Fig. 6 ist eine Ausführungsform gezeigt, bei der die vollständige abtastbare Trajektorie ausleuchtbar ist. Charakteristisch für diese Ausführungsform ist somit, dass sie vier unterschiedliche Bildaufbaurichtungen aufweist. Somit existierten hier ausleuchtbarer Trajektorienabschnitte 165 mit einer erster Bildaufbaurichtung, ausleuchtbarer Trajektorienabschnitt 170 mit einer zweiten Bildaufbaurichtung, ausleuchtbarer Trajektorienabschnitt 175 mit einer dritten Bildaufbaurichtung und ausleuchtbarer Trajektorienabschnitte 180 mit einer vierten Bildaufbaurichtung.

Um Einzustellen, ob ein bestimmter Trajektorienabschnitt ausleuchtbar ist oder nicht, kann die Lichtquelle 105 entsprechend gesteuert werden. Im Sinne der vorliegenden Erfindung kann ein Trajektorienabschnitt, der nicht ausleuchtbar ist, von einem Trajektorienabschnitt, der ausleuchtbar ist, dahingehend unterschieden werden, dass beim Abtasten eines Trajektorienabschnitts, der nicht ausleuchtbar ist, ein bestimmte Helligkeitswert nicht überschritten werden darf. Dieser Helligkeitswert darf dann aber überschritten werden, wenn ein ausleuchtbarer Trajektorienabschnitt abgetastet wird. Der Begriff "ausleuchtbar" impliziert somit nicht, dass die Lichtquelle gar kein Licht emittieren darf, wenn ein nicht ausleuchtbarer Trajektorienabschnitt abgetastet wird. Vielmehr reicht auch ein ausreichend hoher garantierter Helligkeitsunterschied zwischen ausleuchtbaren und nicht-ausleuchtbaren Trajektorienabschnitten aus.

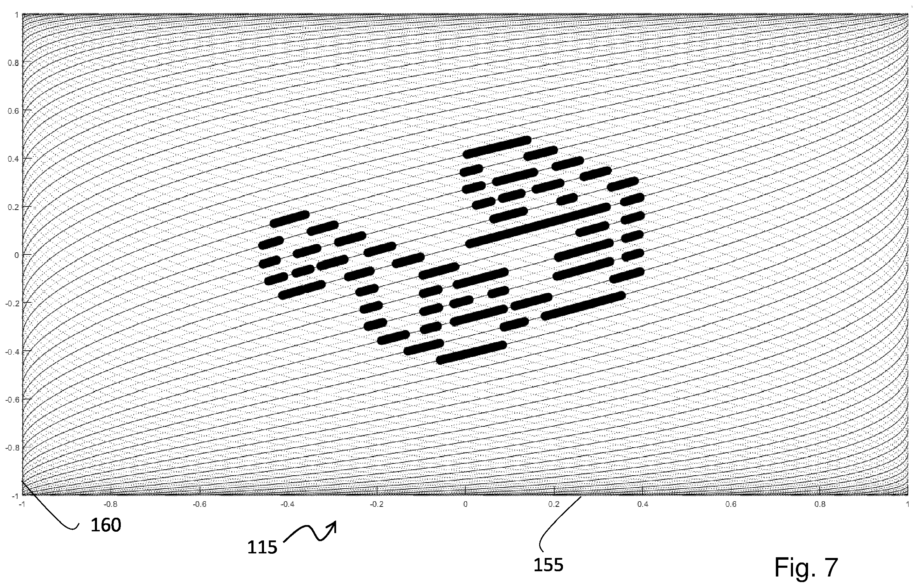

Die Figuren 7, 8 und 9 zeigen nun schematisch die Projektion eines Bildes in Form einer Brille mittels der in den Figuren 4, 5 und 6 gezeigten Bildaufbautypen. Die dabei gewählte abtastbare Trajektorie 130 in Form einer Lissajous-Figur ist um ein Vielfaches engmaschiger als in den schematischen Darstellungen der Figuren 4, 5 und 6.

In Fig. 7 ist das wahrnehmbare Sichtfeld 115 mit einer Vertikalachse 160 und einer Horizontalachse 155 gezeigt. Die gepunkteten Linien zeigen die abtastbaren aber nicht ausleuchtbaren Trajektorienabschnitts und somit einen Teil der abtastbaren Trajektorie 130. Die dünne durchgezogenen Linien zeigen die abtastbaren und ausleuchtbaren aber nicht ausgeleuchteten Trajektorienabschnitte. Die dicken durchgezogenen Linien zeigten die abtastbare, ausleuchtbare und tatsächlich für die Zwecke der Bildprojektion ausgeleuchteten Trajektorienabschnitte. Bei der Ausführungsform des Verfahrens 325 bzw. der MEMS-Spiegel-Anordnung 100, die der in Fig. 7 gezeigten Projektion zugrunde liegt, umfasst der Bildaufbau ausschließlich eine einzige Bildaufbaurichtung wie in Zusammenhang mit Fig. 4 erläutert.

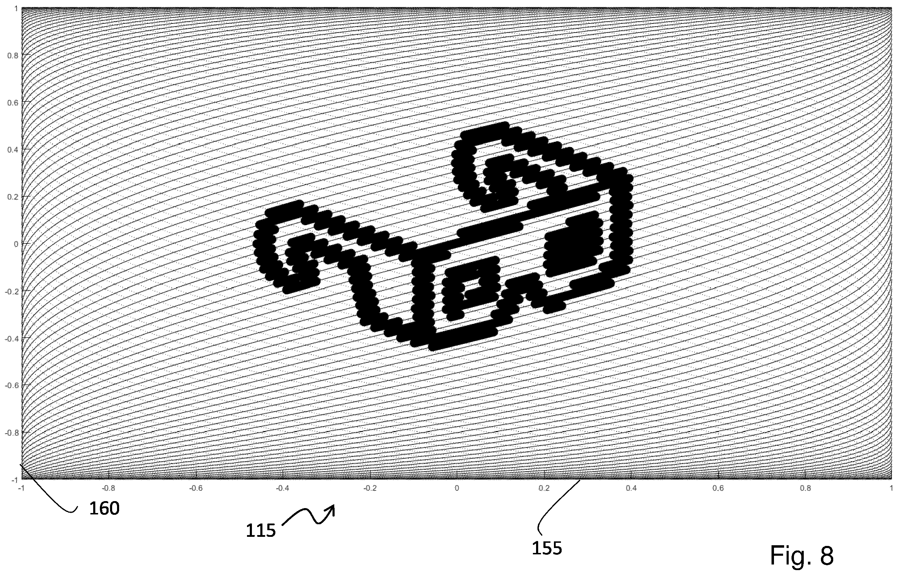

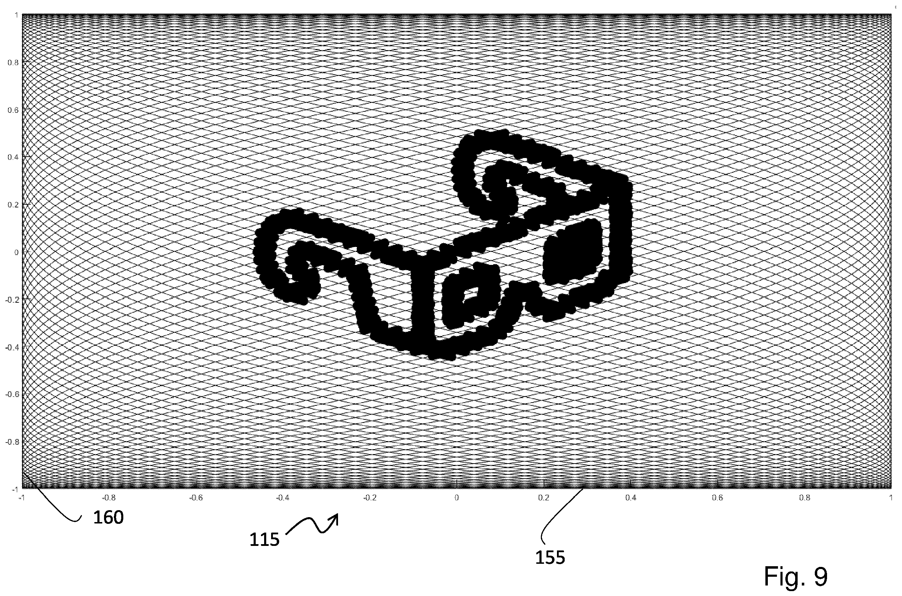

Die Bedeutung der Linienarten- und dicke ist in den Figuren 8 und 9 dieselbe wie in Fig. 7. In diesem Sinne zeigt Fig. 8 eine Projektion eines Bildes, der eine Ausführungsform des Verfahrens 325 bzw. der MEMS-Spiegel-Anordnung 100 zugrunde liegt, die genau zwei entgegengesetzte Bildaufbaurichtungen umfasst - wie in Zusammenhang mit Fig. 5 erläutert. Fig. 9 zeigt demnach eine Projektion eines Bildes, der eine Ausführungsform des Verfahrens 325 bzw. der MEMS-Spiegel-Anordnung 100 zugrunde liegt, die genau vier Bildaufbaurichtungen umfasst - wie in Zusammenhang mit Fig. 6 erläutert.

Von Fig. 7 zu Fig. 9 gehend wird klar, dass sich mit mehreren Bildaufbaurichtungen die Effizienz der Projektion steigern lässt, da ein größerer Anteil der abtastbaren Trajektorie 130 für das tatsächliche Ausleuchten des Bildes genutzt werden kann.

Die im Zuge dieser Erfindung beschriebenen Bereiche für den Quotienten der Antriebsfrequenzen, der Anzahl von abgetasteten Lissajous-Figuren pro Sekunde (LPS) und der weiteren hier beschriebenen Parameter ermöglichen jeweils eine vorteilhafte Wahl eines Arbeitspunktes für den Betrieb des MEMS-Spiegels 125a, bei dem eine für das menschliche Auge angenehm wahrnehmbare Bildprojektion eintritt. Die menschliche Wahrnehmung ist dabei multifaktoriell abhängig, sodass alle hier beschriebenen Bildaufbautypen und die damit verbundenen Ausführungsformen für einen angenehm wahrnehmbaren Bildaufbau herangezogen werden können.

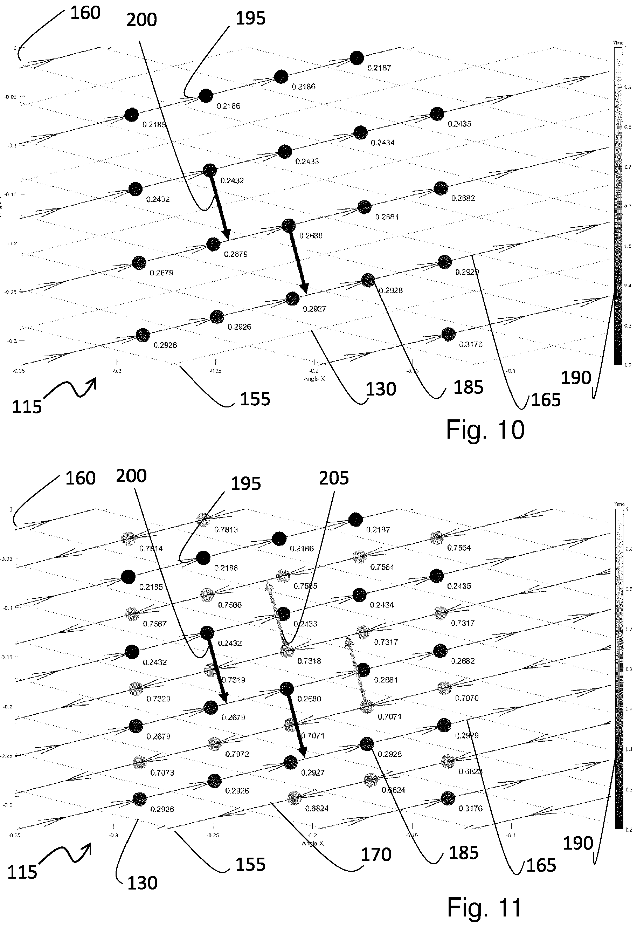

Das Konzept der Bildaufbaurichtungen ist in den Figuren 10 bis 13 nochmals im Detail gezeigt. Auch in den Fig. 10, 11, 12 und 13 sind die abtastbaren aber nicht ausleuchtbaren Trajektorienabschnitte durch eine gestrichelte Linie dargestellt und sind die abtastbaren und ausleuchtbaren aber nicht ausgeleuchteten Trajektorienabschnitte durch eine durchgezogene Linie dargestellt. Ein wenig anders als in den Fig. 7 bis 9 sind die tatsächlich ausgeleuchteten Trajektorienabschnitte durch endlich große Ausleuchtungspunkte/ Spots 185 dargestellt, die schematisch einen Bildpixel darstellen. Zusätzlich ist für die ausleuchtbaren Trajektorienabschnitte 165, 170, 175 und 180 in den Fig. 10 bis 13 auch die Abtastrichtung in Form eines Abtastrichtungsvektor 195, der mit der durchgezogenen Linie integriert ist, angegeben. Auch weist jeder Ausleuchtungspunkt 185 einen Zeitstempel auf, der jeweils schräg unten rechts zum dazugehörigen Ausleuchtungspunkt 185 angeordnet ist. Der Ausleuchtungspunkt 185 weist zudem eine dem Zeitstempel und der dazugehörigen Zeitskala 190 entsprechende Graustufung auf. Die Graustufung lässt erkennen, welche Ausleuchtungspunkte 185 "älter" und welche "jünger" sind, also die zeitliche Reihenfolge, mit der die Ausleuchtungspunkte 185 ausgeleuchtet werden.

Die Figuren 10, 11, 12 und 13 zeigen jeweils einen Ausschnitt aus der Mitte eines Sichtfeldes 115, welches mit einer abtastbaren Trajektorie 130 assoziiert ist, die mit einer Lissajous-Figur mit hohen Coprime-Faktoren (zum Beispiel im Bereich von ca. 1000) in den Toleranzgrenzen der Trajektorienregelung identisch ist. Die Trajektorienabschnitte der abtastbaren Trajektorie 130 erstrecken sich in diesem Bereich nahezu gerade und sind entweder parallel zueinander ausgerichtet, wenn sie sich entlang derselben Diagonalrichtung erstrecken, oder schneiden sich, wenn sie sich entlang unterschiedlicher Diagonalrichtungen erstrecken.

In Fig. 10 ist nun analog zu Fig. 4 und Fig. 7 ein Bildaufbau mit einer einzigen Bildaufbaurichtung gezeigt. Die Bildaufbaurichtung zeigt hier von oben links nach unten rechts. Die Ausleuchtungspunkte 185 mit den ältesten Zeitstempeln und den dunkelsten Graustufen befinden sich auf der ausleuchtbaren Trajektorie, die in etwa zwischen der normierten Koordinate (0,-0.1) und der normierten Koordinate (0.16,0)) verläuft. Diese Ausleuchtungspunkte 185 werden dem Abtastrichtungsvektor 195 folgend zuerst ausgeleuchtet. Dann werden die Ausleuchtungspunkte, die in Bildaufbaurichtung auf dem nächstliegenden Trajektorienabschnitt angeordnet sind ausgeleuchtet - untereinander ebenfalls zeitlich dem Abtastrichtungsvektor 195 folgend. So setzt sich der Bildaufbau linienhaft von oben links nach unten rechts - also der Bildaufbaurichtung folgend - fort. Jedem ausleuchtbaren Trajektorienabschnitt lässt sich daher ein Bildaufbaurichtungsvektor zuordnen. Dieser Bildaufbaurichtungsvektor 200 ist in Fig. 10 für zwei zeitlich aufeinanderfolgend ausgeleuchtete und sich im Wesentlichen parallel zueinander erstreckende Trajektorienabschnitte 165 eingezeichnet.

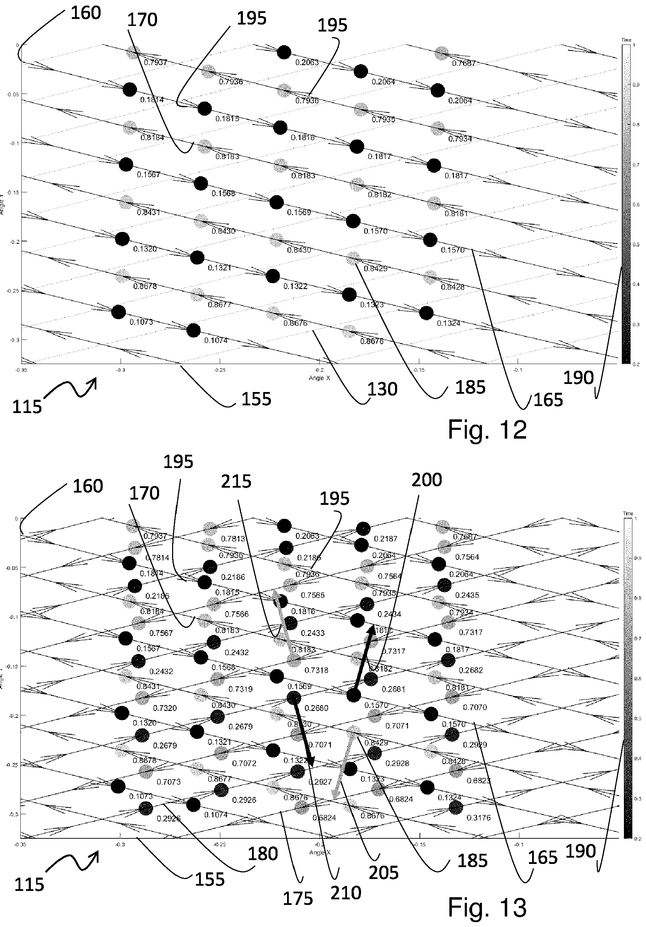

In den Fig. 11 und 12 ist der Bildaufbau analog zu Fig. 5 und Fig. 8 für zwei Bildaufbaurichtungen gezeigt, wobei in Fig. 11 diejenigen Trajektorienabschnitte ausgeleuchtet werden, mit denen sich eine Bildaufbaurichtung von links oben nach rechts unten und von rechts unten nach links oben ergibt und in Fig. 12 diejenigen Trajektorienabschnitte ausgeleuchtet werden, mit denen sich eine Bildaufbaurichtung von links unten nach rechts oben und von rechts oben nach links unten ergibt. Das Bild wird durch zwei Gruppen von ausleuchtbaren Trajektorienabschnitten 165, 170 zeitlich aufgebaut. Dabei weist die erste Gruppe von Trajektorienabschnitten 165 einen ersten Bildaufbaurichtungsvektor 200 auf und die zweite Gruppe von Trajektorienabschnitten 170 weist einen zweiten Bildaufbaurichtungsvektor 205 auf. Der erste Bildaufbaurichtungsvektor 200 und der zweite Bildaufbaurichtungsvektor 205 sind im Wesentlichen entgegengesetzt zueinander ausgerichtet. In Sinne der vorliegenden Erfindung zeigen die Figuren 11 und 12 das Ergebnis eines Zeilensprungverfahrens mit zwei entgegengesetzt zueinander ausgerichteten Bildaufbaurichtungen.

Das globale Verständnis wird durch die Fig. 13 vervollständigt. Fig. 13 zeigt nun analog zu den Fig. 6 und 9 - aber mit den Darstellungseigenschaften der Figuren 10, 11 und 12 - die Trajektorien und Ausleuchtungspunkte, wenn alle vier Bildaufbaurichtungen für das Ausleuchten eines Bildes genutzt werden. Hierdurch ergeben sich ein ausleuchtbarer Trajektorienabschnitt 165 mit erster Bildaufbaurichtung, ein ausleuchtbarer Trajektorienabschnitt mit zweiter Bildaufbaurichtung 170, ein ausleuchtbarer Trajektorienabschnitt 175 mit dritter Bildaufbaurichtung und ein ausleuchtbarer Trajektorienabschnitt 180 mit vierter Bildaufbaurichtung. Auch sind nun ein erster Bildaufbaurichtungsvektor 200 und ein zweiter Bildaufbaurichtungsvektor 205 erkennbar, die im Wesentlichen entgegengesetzt zueinander ausgerichtet. Zusätzlich sind hier ein dritter Bildaufbaurichtungsvektor 210 und ein vierter Bildaufbaurichtungsvektor 215 erkennbar, die ebenfalls im Wesentlichen entgegengesetzt zueinander ausgerichtet sind.

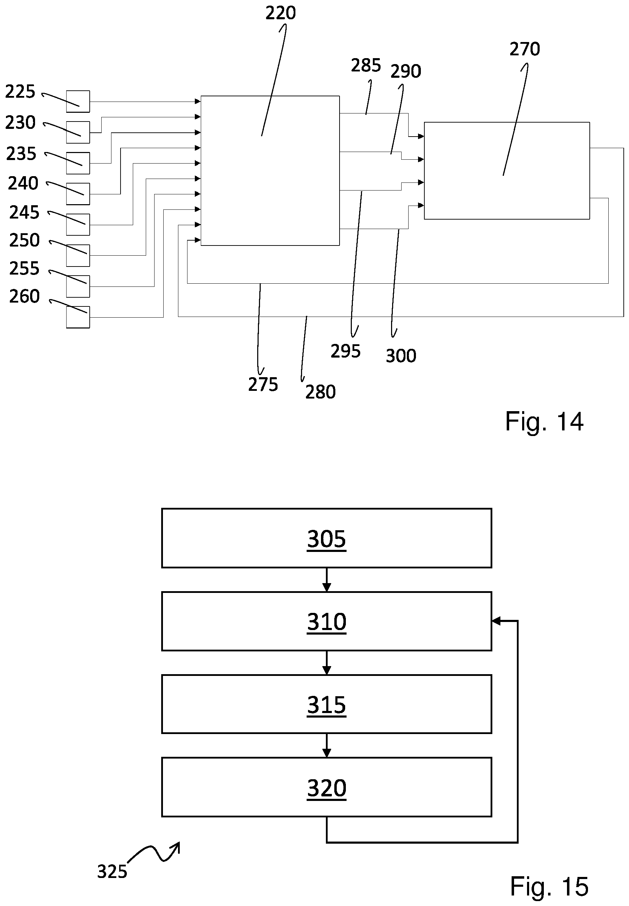

Fig. 14 zeigt ein Beispiel für eine Ausführungsform einer erfindungsgemäßen Regelvorrichtung 220. Die Regelvorrichtung 220 kann dazu genutzt werden, den MEMS-Spiegel 125a auf einen Arbeitspunkt zu steuern, der mit einem für das menschliche Auge 120 angenehm wahrnehmbaren Bildaufbau verknüpft ist. Aufgrund der multifaktoriellen Abhängigkeit der menschlichen Wahrnehmung ist die Regelvorrichtung 220 derart ausgebildet, dass sie mehrere Regelgrößen 225, 230, 235, 240, 245, 250, 255, 260 gleichzeitig innerhalb eines jeweiligen Toleranzintervalls regeln kann. Bei der hier gezeigten Regelvorrichtungen 220 werden beispielhaft die Anzahl der verwendeten Bildaufbaurichtungen (erste Regelgröße 225), die Raumwinkelgröße des Sichtfeldes (zweite Regelgröße 230), die Position des Sichtfeldes (dritte Regelgröße 235), die Pixelauflösung (vierte Regelgröße 240), die Größe LPS (fünfte Regelgröße 245), die Größe $\alpha$ (sechste Regelgröße 250), sie Abtastrichtung (siebte Regelgröße 255) und die Bildaufbaugeschwindigkeit (achte Regelgröße 260) als Regelgrößen mit Toleranzintervallen vorgegeben. Es können aber auch weniger oder mehr Regelgrößen in unterschiedlicher Konstellation vorgegeben werden. Die Regelvorrichtung 220 ermittelt in Abhängigkeit von den vorgegebenen Toleranzintervallen dann die hierfür optimalen Antriebsfrequenzen FR1 285 und FR2 290 sowie die Antriebsspannungen U1 295 und U2 300. Diese werden einer MEMS-Antriebs- und Feedbackeinheit 270 übergeben, sodass der MEMS-Spiegel 125a mit den entsprechenden Antriebsfrequenzen FR1 285 und FR2 290 sowie die entsprechenden Antriebsspannungen U1 295 und U2 300 angetrieben wird. Ein Feedbacksignal 275 bezüglich der ersten Schwingungsachse und ein Feedbacksignal 280 bezüglich der zweiten Schwingungsachse, welche die MEMS-Antriebs- und Feedbackeinheit 270 vom MEMS-Spiegel 125a bereitgestellt bekommt und welche Informationen über die tatsächliche Lage des MEMS-Spiegels 125a enthält, wird der Regelvorrichtung 220 ebenfalls als Ist-Wert zugeführt, sodass diese Feedback-Information in den Regelungsprozess miteingeschlossen werden kann, beispielsweise, um die Ist-Trajektorie innerhalb einer Soll-Einhüllenden zu regeln.

Fig. 15 zeigt beispielhaft und schematisch eine Ausführungsform des erfindungsgemäßen Verfahrens. Zunächst wird in einem ersten Schritt 305 eine MEMS-Spiegel-Anordnung bereitgestellt und der MEMS-Spiegel mit für den Start des Verfahrens vordefinierten Antriebsfrequenzen FR1 285 und FR2 290 angetrieben. Sofern bereits beim Start möglich erfolgt in einem zweiten Schritt 310 ein Abgleich der Ist-Werte der vorgegebenen Regelgrößen mit den vordefinierten Soll-Intervallen bzw. Soll-Einhüllenden. Daran schließt sichder Steuerungsschritt315 an, mit dem die Antriebsfrequenzen FR1 285 und FR2 280 in Abhängigkeit von den Ergebnissen des im vorangegangen Schritt 310 getätigten Abgleiches eingestellt werden, d. h. ggf. geändert werden. Zudem werden in einem weiteren Schritt 320 die Feedbacksignale des MEMS-Spiegels 125a dazu genutzt, die IST-Trajektorie zu bestimmen und diese mit der Soll-Einhüllenden der Soll-Trajektorie (im Sinne einer Regelgröße) im wiederholt erfolgenden Schritt 310 zu vergleichen, wodurch sich der Regelkreis schließt.

Für Zwecke der ursprünglichen Offenbarung wird darauf hingewiesen, dass sämtliche Merkmale, bzw. Ausführungsformen wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, sowie er durch die Ansprüche definiert wird. Die Erfindung ist nicht auf die offenbarten Ausführungsformen beschränkt.

Bezugszeichenliste

| | |
|---|---|
| 100 | MEMS-Spiegel-Anordnung |
| 105 | Lichtquelle |
| 110a | von der Lichtquelle emittiertes Lichtbündel |
| 110b | vom MEMS-Spiegel reflektiertes Lichtbündel |
| 115 | von einem Betrachter wahrnehmbares Sichtfeld |
| 120 | Auge eines menschlichen Betrachters |
| 125 | MEMS-Spiegel-Aufhängung |
| 125a | MEMS-Spiegel |
| 130 | abtastbare Trajektorie |
| 135 | MEMS-Spiegel-Steuerung |
| 140 | Vertikalwinkel des Sichtfeldes |
| 145 | Horizontalwinkel des Sichtfeldes |
| 150 | Menschlicher Betrachter |
| 155 | Horizontalachse des Sichtfeldes |
| 160 | Vertikalachse des Sichtfeldes |
| 165 | ausleuchtbarer Trajektorienabschnitte mit erster Bildaufbaurichtung |
| 170 | ausleuchtbarer Trajektorienabschnitte mit zweiter Bildaufbaurichtung |
| 175 | ausleuchtbarer Trajektorienabschnitte mit dritter Bildaufbaurichtung |
| 180 | ausleuchtbarer Trajektorienabschnitte mitvierter Bildaufbaurichtung |
| 185 | Ausleuchtungspunkte/Spots |
| 190 | Zeitstempelskala |
| 195 | Abtastrichtungsvektor |
| 200 | erster Bildaufbaurichtungsvektor |
| 205 | zweiter Bildaufbaurichtungsvektor |
| 210 | dritter Bildaufbaurichtungsvektor |
| 215 | vierter Bildaufbaurichtungsvektor |
| 220 | Regelvorrichtung |
| 225 | erste Regelgröße |
| 230 | zweite Regelgröße |
| 235 | dritte Regelgröße |
| 240 | vierte Regelgröße |
| 245 | fünfte Regelgröße |
| 250 | sechste Regelgröße |
| 255 | siebte Regelgröße |
| 260 | achte Regelgröße |
| 270 | MEMS-Antriebs- und Feedbackeinheit |
| 275 | Feedbacksignal bezüglich der ersten Schwingungsachse L1 |
| 280 | Feedbacksignal bezüglich der zweiten Schwingungsachse L2 |
| 285 | erste Antriebsfrequenz FR1 |
| 290 | zweite Antriebsfrequenz FR2 |
| 295 | erste Antriebsspannung U1 |
| 300 | zweite Antriebsspannung U2 |
| 305 | Bereitstellen einer MEMS-Spiegel-Anordnung |
| 310 | Abgleich der Ist-Werte mit den Soll-Intervallen der Regelgrößen |
| 315 | Ansteuern des MEMS-Antriebs mit Antriebsfrequenzen FR1 und FR2 |

320 Auslesen der Feedbacksignale und Abgleich mit Soll-Einhüllenden der Trajektorie
325 Verfahren

**Patentansprüche**

1. Verfahren zum Antreiben einer resonanten Schwingungsbewegung eines MEMS-Spiegels (125a) bezüglich einer ersten Schwingungsachse L1 und einer resonanten Schwingungsbewegung des MEMS-Spiegels (125a) bezüglich einer zweiten Schwingungsachse L2, mit den Schritten:

   A) Steuern der Schwingungsbewegung des MEMS-Spiegels (125a) bezüglich der ersten Schwingungsachse L1 mit einer ersten Antriebsfrequenz FR1 (285) grö-ßer Null,
   B) Steuern der Schwingungsbewegung des MEMS-Spiegels bezüglich der zweiten Schwingungsachse L2 mit einer zweiten Antriebsfrequenz FR2 (290) größer Null,
   wobei die erste Schwingungsachse und die zweite Schwingungsachse derart definiert sind und die erste Antriebsfrequenz FR1 (285) und die zweite Antriebsfrequenz FR2 (290) derart ausgebildet sind, dass die erste Antriebsfrequenz FR1 (285) kleiner als die zweite Antriebsfrequenz FR2 (290) ist,
   wobei die Schwingungsbewegungen des MEMS-Spiegels (125a) in den Schritten A und B derart gesteuert werden, dass der Quotient, der sich aus der ersten Antriebsfrequenz FR1 als Dividend und der zweiten Antriebsfrequenz FR2 als Divisor ergibt, in einem Regelbetrieb kleiner 0,5000 oder gleich 0,5000 ist.

2. Verfahren gemäß Anspruch 1,
   wobei die Schwingungsbewegungen des MEMS-Spiegels (125a) in den Schritten A und B derart gesteuert werden, dass der Quotient, der sich aus der ersten Antriebsfrequenz FR1 (285) als Dividend und der zweiten Antriebsfrequenz FR2 (290) als Divisor ergibt größer als 0,0500 und kleiner als 0,4878, vorzugsweise größer als 0,0500 und kleiner als 0,4800 besonders bevorzugt größer als 0,0500 und kleiner als 0,4500 ist.

3. Verfahren gemäß einem der voranstehenden Ansprüche,
   wobei die Schwingungsbewegungen des MEMS-Spiegels (125a) in den Schritten A und B derart gesteuert werden, dass der Quotient, der sich aus der ersten Antriebsfrequenz FR1 (285) als Dividend und der zweiten Antriebsfrequenz FR2 (290) als Divisor ergibt, aus einem geschlossenen Quotient-Intervall ausgewählt ist aus der Gruppe von Quotient-Intervallen bestehend aus: [0,0001; 0,0063], [0,1225; 0,1259], [0,1232; 0,1260], [0,1240; 0,1268], [0,1241; 0,1274], [0,1402; 0,1438], [0,1410; 0,1438], [0,1419; 0,1448], [0,1419; 0,1456], [0,1636; 0,1675], [0,1646; 0,1676], [0,1657; 0,1687], [0,1658; 0,1697], [0,1966; 0,2009], [0,1977; 0,2010], [0,1990; 0,2023], [0,1991; 0,2035], [0,2458; 0,2508], [0,2473; 0,2509], [0,2491; 0,2527], [0,2492; 0,2542], [0,2828; 0,2865], [0,2837; 0,2867], [0,2847; 0,2877], [0,2848; 0,2886], [0,3276; 0,3340], [0,3300; 0,3342], [0,3325; 0,3367], [0,3326; 0,3390], [0,3722; 0,3759], [0,3732; 0,3760], [0,3740; 0,3768], [0,3741; 0,3778], [0,3961; 0,4008], [0,3975; 0,4009], [0,3991; 0,4025], [0,3992; 0,4039], [0,4255; 0,4295], [0,4265; 0,4295], [0,4276; 0,4307], [0,4277; 0,4317], [0,4911; 0,4999] und [0,4950; 0,4999].

4. Verfahren gemäß einem der Ansprüche 1 oder 2,
   wobei die Schwingungsbewegungen des MEMS-Spiegels (125a) in den Schritten A und B derart gesteuert werden, dass der Quotient, der sich aus der ersten Antriebsfrequenz FR1 (285) als Dividend und der zweiten Antriebsfrequenz FR2 (290) als Divisor ergibt, aus dem geschlossenen Quotienten-Intervall [0,0001; 0,0116] ausgewählt ist.

5. Verfahren gemäß einem der voranstehenden Ansprüche,

   wobei der MEMS-Spiegel (125a) im Regelbetrieb zur Projektion oder zum Scannen eines Bildes betrieben wird, wobei die erste Antriebsfrequenz FR1 (285) und/oder die zweite Antriebsfrequenz FR2 (290) im Regelbetrieb des MEMS-Spiegels (125a) verändert wird, um mindestens eine Regelungsgröße wie zum Beispiel die Größe des von einem Betrachter (150) wahrnehmbaren und vom MEMS-Spiegel (125a) abtastbaren Sichtfeldes (115) innerhalb eines Soll-Wert-Intervalls oder eine Trajektorie einer Lissajous-Figur innerhalb einer Soll-Einhüllenden zu regeln.

6. Verfahren gemäß dem voranstehenden Anspruch,
   wobei die erste Antriebsfrequenz FR1 (285) und/oder die zweite Antriebsfrequenz FR2 (290) im Regelbetrieb des MEMS-Spiegels (125a) derart verändert wird, dass das von einem Betrachter (150) wahrnehmbare und vom MEMS-Spiegel (125a) abtastbare Sichtfeld innerhalb eines hierfür vordefinierten Soll-Wert-Intervalls geregelt ist.

**7.** Verfahren gemäß einem der voranstehenden Ansprüche,

wobei die erste Antriebsfrequenz FR1 (285) und die zweite Antriebsfrequenz FR2 (290) derart gesteuert sind, dass eine vom MEMS-Spiegel (125a) abtastbare zweidimensionale Trajektorie *TR* (130) mit fortlaufender Zeit t folgende Parametrisierung erfüllt:

$$\boldsymbol{TR} = \left(\cos(2 * \pi * \mathrm{m} * \mathrm{LPS} * \mathrm{t}), \cos\left(2 * \pi * \mathrm{n} * \mathrm{LPS} * \mathrm{t} - \left(\frac{\alpha}{m}\right) * \pi\right)\right),$$

wobei m und n dimensionslose Größen sind, die jeweils ganze Zahlen annehmen und die als erster Coprime-Faktor m und zweiter Coprime-Faktor n einer Lissajous-Figur bezeichnet werden,
wobei die Größe LPS eine rationale Zahl mit der Einheit 1/s annimmt,
wobei die Größe $\alpha$ eine rationale Zahl mit der Einheit rad annimmt.

**8.** Verfahren gemäß dem voranstehenden Anspruch,
wobei die erste Antriebsfrequenz FR1 (285) und die zweite Antriebsfrequenz FR2 (290) derart gesteuert sind, dass der erste Coprime-Faktor m im Regelbetrieb des MEMS-Spiegels (125a) einen Wert ausgewählt aus dem geschlossenen Intervall [1; 5000], vorzugsweise ausgewählt aus dem geschlossenen Intervall [1; 2500], annimmt und/oder der zweite Coprime-Faktor n im Regelbetrieb des MEMS-Spiegels (125a) einen Wert ausgewählt aus dem geschlossenen Intervall [1; 5000], vorzugsweise ausgewählt aus dem geschlossenen Intervall [1; 2500], annimmt.

**9.** Verfahren gemäß einem der Ansprüche 7 oder 8,

wobei die erste Antriebsfrequenz FR1 (285) und die zweite Antriebsfrequenz FR2 (290) derart gesteuert sind, dass die Größe LPS im Regelbetrieb des MEMS-Spiegels (125a) einen Wert ausgewählt aus dem geschlossenen Intervall [20; 300] annimmt,
wobei die erste Antriebsfrequenz FR1 (285) und die zweite Antriebsfrequenz FR2 (290) vorzugsweise derart gesteuert sind, dass die Größe LPS im Regelbetrieb einen Wert ausgewählt aus dem geschlossenen Intervall [20; 95] oder einen Wert ausgewählt aus dem geschlossenen Intervall [105; 260] annimmt,
wobei die erste Antriebsfrequenz FR1 (285) und die zweite Antriebsfrequenz FR2 (290) besonders bevorzugt derart gesteuert sind, dass die Größe LPS im Regelbetrieb einen Wert ausgewählt aus dem geschlossenen Intervall [40; 90] oder einen Wert ausgewählt aus dem geschlossenen Intervall [120; 200] annimmt.

**10.** Verfahren gemäß einem der Ansprüche 7 bis 9,
wobei die erste Antriebsfrequenz FR1 (285) und/oder die zweite Antriebsfrequenz FR2 (290) im Regelbetrieb des MEMS-Spiegels (125a) derart gesteuert wird, dass die Größe LPS mit einer Toleranz von $\pm 1$, vorzugsweise $\pm 0{,}1$ und besonders bevorzugt $\pm 0{,}01$ geregelt ist.

**11.** Verfahren gemäß einem der Ansprüche 7 bis 10,
wobei die erste Antriebsfrequenz FR1 (285) und die zweite Antriebsfrequenz FR2 (290) derart gesteuert sind, dass die Größe $\alpha$ mit einer Toleranz von $\pm 0{,}15$ auf einen ganzzahligen oder halbzahligen Zahlenwert geregelt ist.

**12.** Verfahren gemäß einem der Ansprüche 7 bis 11,
wobei die erste Antriebsfrequenz FR1 (285) und die zweite Antriebsfrequenz FR2 (290) derart gesteuert sind, dass zumindest zwei abtastbare Trajektorienabschnitte im Zeitraum (1/LPS) streckenweise identisch sind, aber entgegengesetzt zueinander durchlaufen und abgetastet werden.

**13.** Verfahren gemäß einem der Ansprüche 7 bis 11,
wobei die erste Antriebsfrequenz FR1 (285) und die zweite Antriebsfrequenz FR2 (290) derart gesteuert sind, dass kein Paar von Trajektorienabschnitten im Zeitraum (1/LPS) streckenweise identisch ist.

**14.** Verfahren gemäß einem der Ansprüche 7 bis 13,
wobei die Schwingungsbewegungen des MEMS-Spiegels (125a) in den Schritten A und B derart geregelt oder gesteuert werden, dass mindestens 80%, vorzugsweise mindestens 90% und besonders bevorzugt 100% eines für einen Betrachter wahrnehmbaren Sichtfeldes in einem Zeitraum (1/LPS) abgetastet wird.

**15.** Verfahren gemäß einem der voranstehenden Ansprüche,

wobei das Verfahren zumindest einen der folgenden weiteren Schritte umfasst:

C1) Beleuchten des MEMS-Spiegels (125a) mit einer Lichtquelle (105),

wobei die Schwingungsbewegungen des MEMS-Spiegels (125a) in den Schritten A und B derart gesteuert werden, dass ein gedachtes von der Lichtquelle (105) dauerhaft emittiertes und vom MEMS-Spiegel reflektiertes Lichtbündels eine Trajektorie (130) in einem von einem Betrachter (150) wahrnehmbaren Sichtfeld (115) abtastet,
wobei der MEMS Spiegel (125a) derart von der Lichtquelle (105) beleuchtet wird, dass das Sichtfeld (115) zumindest entlang eines Trajektorienabschnitts oder mehrerer Trajektorienabschnitte ausgeleuchtet wird, um ein Bild im Sichtfeld (115) zu projizieren;

und/oder
C2) Detektieren eines vom MEMS-Spiegels (125a) reflektierten Lichtbündels mit einem Detektor,

wobei die Schwingungsbewegungen des MEMS-Spiegels (125a) in den Schritten A und B derart gesteuert werden, dass ein gedachtes vom Detektor emittierter und vom MEMS-Spiegel reflektiertes Lichtbündels eine Trajektorie (130) in einem von einem Betrachter (150) wahrnehmbaren Sichtfeld (115) abtastet, wobei der Detektor ein aus dem Sichtfeld (115) des Betrachters (150) stammendes und vom MEMS-Spiegel (125a) reflektiertes tatsächliches Lichtbündel derart erfasst, dass ein Bild aus dem Sichtfeld (115) zumindest entlang eines Abschnitts oder mehrere Abschnitte der Trajektorie (130) erfasst wird.

16. Verfahren gemäß dem voranstehenden Anspruch, soweit dieser auf Anspruch 7 rückbezogen ist, wobei die erste Antriebsfrequenz FR1 (285) und die zweite Antriebsfrequenz FR2 (290) derart gesteuert sind, dass die vollständige abtastbare Trajektorie (130) im wahrnehmbaren Sichtfeld (115) eines Betrachtes (150) während eines Zeitraums von (1/LPS) eine geschlossene Lissajous-Figur umfasst und vorzugsweise ausbildet.

17. Verfahren gemäß einem der Ansprüche 15 oder 16, wobei die Schwingungsbewegungen des MEMS-Spiegels (125a)in den Schritten A und B derart gesteuert werden und der MEMS-Spiegel (125a) im Schritt C1 derart beleuchtet oder im Schritt C2 das vom MEMS-Spiegel (125a) reflektierte Licht derart erfasst wird, dass die maximal erreichbare Raumwinkelausleuchtgeschwindigkeit bzw. Raumwinkelerfassungsgeschwindigkeit im für einen Betrachter (150) wahrnehmbaren Sichtfeld (115) zwischen einschließlich 750 Quadratgrad/s und einschließlich 7500000 Quadratgrad/s, vorzugsweise zwischen 10000 Quadratgrad/s und einschließlich 1500000 Quadratgrad/s, bzw. besonders bevorzugt zwischen einschließlich 15000 Quadratgrad/s und einschließlich 900000 Quadratgrad/s beträgt.

18. Verfahren gemäß einem der Ansprüche 15 bis 17, wobei das vom Betrachter (150) wahrnehmbare Sichtfeld (115) zumindest bereichsweise mittels Zeilensprungverfahren in Schritt C1 ausgeleuchtet oder in Schritt C2 erfasst wird, sodass in einem Bereich des vom Betrachter (150) wahrnehmbaren Sichtfeldes (115), vorzugsweise in einem Bereich von mindestens 75% des wahrnehmbaren Sichtfeldes (115), benachbarte und sich im Wesentlichen parallel erstreckende Trajektorienabschnitte nicht unmittelbar zeitlich nacheinander ausgeleuchtet werden.

19. Verfahren gemäß einem der voranstehenden Ansprüche 15 bis 18, wobei die Schwingungsbewegungen des MEMS-Spiegels (125a) in den Schritten A und B derart gesteuert werden und der MEMS-Spiegel (125a) im Schritt C1 derart beleuchtet oder im Schritt C2 das vom MEMS-Spiegel (125a) reflektierte Licht derart erfasst wird, dass ein mit der Einheit grad/s messbare und im Wesentlichen senkrecht zu aufeinanderfolgend ausgeleuchteter und sich im Wesentlichen parallel zueinander erstreckenden Trajektorienabschnitten ausgerichteter lokaler Bildaufbaugeschwindigkeitsvektor (200, 205, 210, 215) in einem Bereich von mindestens 50 % des abtastbaren Sichtfeldes einen Betrag aufweist, der größer als 1700 Grad pro Sekunde ist.

20. Verfahren gemäß einem der Ansprüche 15 bis 19,

wobei die Schwingungsbewegungen des MEMS-Spiegels (125a) in den Schritten A und B derart gesteuert werden und der MEMS-Spiegel (125a) im Schritt C1 derart beleuchtet wird, dass zumindest in einem Teilbereich des vom Betrachter (150) wahrnehmbaren Sichtfelds ein Bild entlang einer ersten Bildaufbaurichtung (200) projiziert oder erfasst wird,
wobei die erste Bildaufbaurichtung (200) zu einer Mehrzahl von ausgeleuchteten Trajektorienabschnitten im Wesentlichen senkrecht ausgerichtet ist, wobei sich die Mehrzahl von ausgeleuchteten Trajektorienabschnitten in Richtung der ersten Bildaufbaurichtung (200) im Wesentlichen parallel zueinander erstrecken und der ersten Bildaufbaurichtung (200) folgend ausgeleuchtet bzw. erfasst werden

**21.** Verfahren gemäß dem voranstehenden Anspruch,
wobei die Schwingungsbewegungen des MEMS-Spiegels (125a) in den Schritten A und B derart gesteuert werden und der MEMS-Spiegel (125a) im Schritt C1 derart beleuchtet wird, dass zumindest zwei sich im Wesentlichen parallel zueinander erstreckende und unmittelbar benachbarte ausgeleuchtete Trajektorienabschnitte jeweils eine Bildaufbaurichtung (200, 205, 210, 215) aufweisen, die der Bildaufbaurichtung (200, 205, 210, 215) des jeweils anderen Trajektorienabschnitt entgegengesetzt ist.

**22.** Verfahren gemäß einem der Ansprüche 20 oder 21,

wobei die Schwingungsbewegungen des MEMS-Spiegels (125a) in den Schritten A und B derart gesteuert werden und der MEMS-Spiegel (125a) im Schritt C1 derart beleuchtet wird, dass ein erster ausgeleuchteter Trajektorienabschnitt eine erste Bildaufbaurichtung (200) aufweist, ein zweiter ausgeleuchteter Trajektorienabschnitt eine zweite Bildaufbaurichtung (205) aufweist, ein dritter ausgeleuchteter Trajektorienabschnitt eine dritte Bildaufbaurichtung (210) aufweist und ein vierter ausgeleuchteter Trajektorienabschnitt eine vierte Bildaufbaurichtung (215) aufweist,
wobei sich der erste ausgeleuchtete Trajektorienabschnitt und der zweite ausgeleuchtete Trajektorienabschnitt im Wesentlichen parallel zueinander erstrecken,
wobei sich der dritte ausgeleuchtete Trajektorienabschnitt und der vierte ausgeleuchtete Trajektorienabschnitt im Wesentlichen parallel zueinander erstrecken,
wobei die erste Bildaufbaurichtung (200) und die zweite Bildaufbaurichtung (205) im Wesentlichen parallel und entgegengesetzt zueinander ausgerichtet sind,
wobei die dritte Bildaufbaurichtung (210) und die vierte Bildaufbaurichtung (215) im Wesentlichen parallel aber entgegengesetzt zueinander ausgerichtet sind, sodass die erste und die zweite Bildaufbaurichtung (200, 205) jeweils nicht parallel zur dritten und vierten Bildaufbaurichtung (210, 215) ausgerichtet sind.

**23.** Verfahren gemäß einem der Ansprüche 20, 21 oder 22,

wobei die Schwingungsbewegungen des MEMS-Spiegels (125a) in den Schritten A und B derart gesteuert werden und der MEMS-Spiegel (125a) im Schritt C1 derart beleuchtet wird, dass zumindest eine erste Gruppe von sich im Wesentlichen parallel zueinander erstreckenden ausgeleuchteten Trajektorienabschnitten eine erste Bildaufbaurichtung (200) aufweist und eine zweite Gruppe von sich im Wesentlichen parallel zueinander erstreckenden ausgeleuchteten Trajektorienabschnitten eine zweite Bildaufbaurichtung (205) aufweist,
wobei die erste Bildaufbaurichtung (200) und die zweite Bildaufbaurichtung (205) im Wesentlichen parallel und entgegengesetzt zueinander ausgerichtet sind, wobei innerhalb von mindestens 50%, vorzugsweise mindestens 75%, desjenigen Sichtfeldanteils, auf dem das Bild projiziert wird, jedes Paar ausgeleuchteter und unmittelbar benachbarter und im Wesentlichen parallel zueinander erstreckender Trajektorienabschnitte einen Trajektorienabschnitt umfasst, welcher der ersten Gruppe zugeordnet ist, und einen Trajektorienabschnitt umfasst, welcher der zweiten Gruppe zugeordnet ist.

**24.** Verfahren gemäß dem voranstehenden Anspruch,

wobei die Schwingungsbewegungen des MEMS-Spiegels (125a) in den Schritten A und B derart gesteuert werden und der MEMS-Spiegel (125a) im Schritt C1 derart beleuchtet wird, dass zusätzlich eine dritte Gruppe von sich im Wesentlichen parallel zueinander erstreckenden ausgeleuchteten Trajektorienabschnitten eine dritte Bildaufbaurichtung (210) aufweist und eine vierte Gruppe von sich im Wesentlichen parallel zueinander erstreckenden ausgeleuchteten Trajektorienabschnitten eine vierte Bildaufbaurichtung (215) aufweist,
wobei die dritte Bildaufbaurichtung (210) und die vierte Bildaufbaurichtung (215) im Wesentlichen parallel und entgegengesetzt zueinander ausgerichtet sind,
wobei die erste Bildaufbaurichtung (200) und die zweite Bildaufbaurichtung (205) jeweils nicht im Wesentlichen parallel zur dritten und vierten Bildaufbaurichtung (210, 215) ausgerichtet sind,
wobei innerhalb von mindestens 50%, vorzugsweise mindestens 75%, desjenigen Sichtfeldanteils, auf dem das Bild projiziert wird, jedes Quartett ausgeleuchteter, unmittelbar benachbarter und eine gedachte Raute umschließender Trajektorienabschnitte einen Trajektorienabschnitt umfasst, welcher der ersten Gruppe zugeordnet ist, und einen Trajektorienabschnitt umfasst, welcher der zweiten Gruppe zugeordnet ist, und einen Trajektorienabschnitt umfasst, welcher der dritten Gruppe zugeordnet ist und einen Trajektorienabschnitt umfasst, welcher der vierten Gruppe zugeordnet ist.

**25.** Verfahren gemäß einem der Ansprüche 23 oder 24,

wobei die Schwingungsbewegungen des MEMS-Spiegels (125a) in den Schritten A und B derart gesteuert werden und der MEMS-Spiegel (125a) im Schritt C1 derart beleuchtet wird, dass innerhalb von mindestens 50%, vorzugsweise mindestens 75%, desjenigen Sichtfeldanteils, auf dem das Bild projiziert wird, die Trajektorienabschnitte der ersten Gruppe der ersten Bildaufbaurichtung (200) folgend ausgeleuchtet werden mit einer gruppeninternen Bildaufbaugeschwindigkeit von mindestens 900 Grad pro Sekunde, vorzugsweise mindestens 1200 Grad pro Sekunde und besonders bevorzugt mindestens 1500 Grad pro Sekunde,
wobei in mindestens 50%, vorzugsweise mindestens 75%, desjenigen Sichtfeldanteils, auf dem das Bild projiziert wird, die Trajektorienabschnitte der zweiten Gruppe der zweiten Bildaufbaurichtung (205) folgend ausgeleuchtet werden mit einer gruppeninternen Bildaufbaugeschwindigkeit von mindestens 900 Grad pro Sekunde, vorzugsweise mindestens 1200 Grad pro Sekunde und besonders bevorzugt mindestens 1500 Grad pro Sekunde.

**26.** Verfahren gemäß einem der Ansprüche 20 bis 25,

wobei die Schwingungsbewegungen des MEMS-Spiegels (125a) in den Schritten A und B derart gesteuert werden und der MEMS-Spiegel (125a) im Schritt C1 derart beleuchtet wird, dass ein Abschnitt des vom Betrachter (150) wahrnehmbaren Sichtfelds (115) entlang mehrerer unterschiedlicher Bildaufbaurichtungen (200, 205, 210, 215) ausgeleuchtet wird,
wobei vorzugsweise die Schwingungsbewegungen des MEMS-Spiegels in den Schritten A und B derart gesteuert werden und der MEMS-Spiegel im Schritt C1 derart beleuchtet wird, dass ein Abschnitt des vom Betrachter wahrnehmbaren Sichtfelds entlang mindestens zweier, besonders bevorzugt entlang vierer, unterschiedlicher Bildaufbaurichtungen überlagert ausgeleuchtet wird.

**27.** Verfahren gemäß einem der voranstehenden Ansprüche,

wobei die erste Antriebsfrequenz FR1 (285) und die zweite Antriebsfrequenz FR2 (290) derart eingestellt werden, dass die Summe

$$S = FR1 + FR2$$

mindestens 15 kHz,
vorzugsweise mindestens 45 kHz
und besonders bevorzugt mindestens 60 kHz beträgt.

**28.** Verfahren gemäß einem der voranstehenden Ansprüche,

wobei die Schwingungsbewegungen des MEMS-Spiegels (125a) in den Schritten A und B derart geregelt werden, dass das bezüglich der ersten Schwingungsachse L1 vom MEMS-Spiegel (125a) abtastbare und für einen Betrachter (150) wahrnehmbare Sichtfeld (115) im Bildwinkel eine Größe von
mindestens 5 Grad und maximal 120 Grad,
vorzugsweise mindestens 8 Grad und maximal 90 Grad
und besonders bevorzugt mindestens 10 Grad und maximal 60 Grad aufweist.

**29.** Regelvorrichtung (220) für die Regelung einer einen MEMS-Spiegel (125a) umfassenden MEMS-Spiegel-Anordnung (100), wobei der MEMS-Spiegel (125a) bezüglicher einer ersten Schwingungsachse L1 und einer nicht parallel zur ersten Schwingungsachse ausgerichteten zweiten Schwingungsachse L2 schwingfähig lagerbar ist,

wobei die Regelvorrichtung (220) derart ausgebildet und/oder eingerichtet ist, dass mit der Regelvorrichtung (220) eine erste Antriebsfrequenz FR1 (285) der Schwingungsbewegung des MEMS-Spiegels (125a) bezüglich der ersten Schwingungsachse L1 steuerbar ist,
wobei die Regelvorrichtung (220) derart ausgebildet und/oder eingerichtet ist, dass mit der Regelvorrichtung (220) eine zweite Antriebsfrequenz FR2 (290) der Schwingungsbewegung des MEMS-Spiegels (125a) bezüglich der zweiten Schwingungsachse L2 steuerbar ist,

wobei die Regelvorrichtung (220) derart ausgebildet und/oder eingerichtet ist, dass die Regelvorrichtung (220) zumindest eine Regelgröße wie zum Beispiel die Größe des mit dem MEMS-Spiegel (125a) abtastbaren Sichtfelds (115) empfängt oder ausliest,

wobei die Regelvorrichtung (220) derart ausgebildet und/oder eingerichtet ist, dass sie die erste Antriebsfrequenz FR1 (285) und die zweite Antriebsfrequenz FR2 (290) im Regelbetrieb des MEMS-Spiegels (125a) in Abhängigkeit von der Regelgröße steuert, um die Regelgröße innerhalb eines Toleranzintervalls zu regeln.

30. MEMS-Spiegel-Anordnung (100) umfassend einen MEMS-Spiegel,

wobei die MEMS-Spiegel-Anordnung (100) derart ausgebildet ist, dass eine im Wesentlichen resonante Schwingungsbewegung des MEMS-Spiegels (125a) bezüglich einer ersten Schwingungsachse L1 antreibbar ist,

wobei die MEMS-Spiegel-Anordnung (100) derart ausgebildet ist, dass eine im Wesentlichen resonante Schwingungsbewegung des MEMS-Spiegels (125a) bezüglich einer zweiten Schwingungsachse L2 antreibbar ist,

wobei die MEMS-Spiegel-Anordnung (100) derart ausgebildet ist, dass die erste Schwingungsachse L1 und die zweite Schwingungsachse L2 nicht parallel zueinander ausgebildet sind und dass die erste Schwingungsachse L1 und die zweite Schwingungsachse L2 im Wesentlichen parallel zu einer Spiegelebene des MEMS-Spiegels (125a) ausgerichtet sind,

wobei die MEMS-Spiegel-Anordnung (100) derart ausgebildet ist, dass die im Wesentlichen resonante Schwingungsbewegung bezüglich der ersten Schwingungsachse L1 bei einer ersten Antriebsfrequenz FR1 (285) antreibbar ist,

wobei die MEMS-Spiegel-Anordnung (100) derart ausgebildet ist, dass die im Wesentlichen resonante Schwingungsbewegung bezüglich der zweiten Schwingungsachse L2 bei einer zweiten Antriebsfrequenz FR2 (290) antreibbar ist,

wobei die erste Schwingungsachse L1 und die zweite Schwingungsachse L2 derart definiert sind, dass die erste Antriebsfrequenz FR1 (285) kleiner ist als die zweite Antriebsfrequenz FR2 (290),

wobei die MEMS-Spiegel-Anordnung (100) derart ausgebildet ist, dass der Quotient, der sich aus der ersten Antriebsfrequenz FR1 als Dividend und der zweiten Antriebsfrequenz FR2 als Divisor ergibt, in einem Regelbetrieb kleiner 0,5000 oder gleich 0,5000 ist.

31. MEMS-Spiegel-Anordnung (100) gemäß dem voranstehenden Anspruch, wobei die MEMS-Spiegel-Anordnung (100) derart ausgebildet ist, dass der Quotient, der sich aus der ersten Antriebsfrequenz FR1 (285) als Dividend und der zweiten Antriebsfrequenz FR2 (290) als Divisor ergibt größer als 0,0500 und kleiner als 0,4878, vorzugsweise größer als 0,0500 und kleiner als 0,4800 besonders bevorzugt größer als 0,0500 und kleiner als 0,4500 ist.

32. MEMS-Spiegel-Anordnung (100) gemäß einem der Ansprüche 30 oder 31,
wobei die MEMS-Spiegel-Anordnung (100) derart ausgebildet ist, dass der Quotient, der sich aus der ersten Antriebsfrequenz FR1 (285) als Dividend und der zweiten Antriebsfrequenz FR2 (290) als Divisor ergibt, aus einem geschlossenen Quotient-Intervall ausgewählt ist aus der Gruppe von Quotient-Intervallen bestehend aus: [0,0001; 0,0063], [0,1225; 0,1259], [0,1232; 0,1260], [0,1240; 0,1268], [0,1241; 0,1274], [0,1402; 0,1438], [0,1410; 0,1438], [0,1419; 0,1448], [0,1419; 0,1456], [0,1636; 0,1675], [0,1646; 0,1676], [0,1657; 0,1687], [0,1658; 0,1697], [0,1966; 0,2009], [0,1977; 0,2010], [0,1990; 0,2023], [0,1991; 0,2035], [0,2458; 0,2508], [0,2473; 0,2509], [0,2491; 0,2527], [0,2492; 0,2542], [0,2828; 0,2865], [0,2837; 0,2867], [0,2847; 0,2877], [0,2848; 0,2886], [0,3276; 0,3340], [0,3300; 0,3342], [0,3325; 0,3367], [0,3326; 0,3390], [0,3722; 0,3759], [0,3732; 0,3760], [0,3740; 0,3768], [0,3741; 0,3778], [0,3961; 0,4008], [0,3975; 0,4009], [0,3991; 0,4025], [0,3992; 0,4039], [0,4255; 0,4295], [0,4265; 0,4295], [0,4276; 0,4307], [0,4277; 0,4317], [0,4911; 0,4999] und [0,4950; 0,4999].

33. MEMS-Spiegel-Anordnung gemäß einem der Ansprüche 30 bis 32,

wobei die MEMS-Spiegel-Anordnung (100) derart ausgebildet und eingerichtet ist, dass bei einem resonanten Antreiben der beiden Schwingungsbewegungen mit der ersten Antriebsfrequenz FR1 (285) und der zweiten Antriebsfrequenz FR2 (290) und mit einem gedachten dauerhaft vom MEMS-Spiegel (125a) reflektierten Lichtbündel in einem von einem Betrachter (150) wahrnehmbaren Sichtfeld (115) in einem Zeitraum (1/LPS) genau eine geschlossene Lissajous-Figur abgetastet wird,

wobei die MEMS-Spiegel-Anordnung (100) derart ausgebildet und eingerichtet ist, dass in dem Zeitraum (1/LPS) mehr als 10 Prozent, vorzugsweise mehr als 15 Prozent und besonders bevorzugt mehr als 25 Prozent der geschlossenen Lissajous-Figur mit einem tatsächlichen vom MEMS-Spiegel reflektierten Lichtbündel ausleuchtbar ist.

34. MEMS-Spiegel-Anordnung (100) gemäß einem der Ansprüche 30 bis 33,

wobei die MEMS-Spiegel-Anordnung (100) derart ausgebildet und eingerichtet ist, dass in einem vom Betrachter (150) wahrnehmbaren Sichtfeld (115) ein Bild zumindest abschnittsweise entlang einer ersten Bildaufbaurichtung (200) projizierbar oder erfassbar ist,
wobei die erste Bildaufbaurichtung (200) zu einer Mehrzahl von ausleuchtbaren Trajektorienabschnitten im Wesentlichen senkrecht ausgerichtet ist, wobei sich die Mehrzahl von Trajektorienabschnitten in Richtung der ersten Bildaufbaurichtung (200) im Wesentlichen parallel zueinander erstrecken und der ersten Bildaufbaurichtung (200) folgend ausleuchtbar bzw. erfassbar sind.

35. MEMS-Spiegel-Anordnung (100) gemäß dem voranstehenden Anspruch,
wobei die MEMS-Spiegel-Anordnung (100) derart ausgebildet und eingerichtet ist, dass zumindest zwei sich im Wesentlichen parallel zueinander erstreckende, unmittelbar benachbarte und ausleuchtbare Trajektorienabschnitte jeweils eine Bildaufbaurichtung (200, 205, 210, 215) aufweisen, die der Bildaufbaurichtung (200, 205, 210, 215) des jeweils anderen Trajektorienabschnitt entgegengesetzt ist.

36. MEMS-Spiegel-Anordnung (100) gemäß einem der Ansprüche 34 oder 35,

wobei die MEMS-Spiegel-Anordnung (100) derart ausgebildet und eingerichtet ist, dass ein erster ausleuchtbarer Trajektorienabschnitt (165) eine erste Bildaufbaurichtung (200) aufweist, ein zweiter ausleuchtbarer Trajektorienabschnitt (170) eine zweite Bildaufbaurichtung (205) aufweist, ein dritter ausleuchtbarer Trajektorienabschnitt (175) eine dritte Bildaufbaurichtung (210) aufweist und ein vierter ausleuchtbarer Trajektorienabschnitt (180) eine vierte Bildaufbaurichtung (215) aufweist,
wobei die MEMS-Spiegel-Anordnung (100) derart ausgebildet und eingerichtet ist, dass sich der erste ausleuchtbare Trajektorienabschnitt (165) und der zweite ausleuchtbare Trajektorienabschnitt (170) im Wesentlichen parallel zueinander erstrecken,
wobei die MEMS-Spiegel-Anordnung (100) derart ausgebildet und eingerichtet ist, dass sich der dritte ausleuchtbare Trajektorienabschnitt (175) und der vierte ausleuchtbare Trajektorienabschnitt (180) im Wesentlichen parallel zueinander erstrecken,
wobei die MEMS-Spiegel-Anordnung (100) derart ausgebildet und eingerichtet ist, dass die erste Bildaufbaurichtung (200) und die zweite Bildaufbaurichtung (205) im Wesentlichen parallel und entgegengesetzt zueinander ausgerichtet sind,
wobei die MEMS-Spiegel-Anordnung (100) derart ausgebildet und eingerichtet ist, dass die dritte Bildaufbaurichtung (210) und die vierte Bildaufbaurichtung (215) im Wesentlichen parallel und entgegengesetzt zueinander ausgerichtet sind, sodass die erste und die zweite Bildaufbaurichtung (200, 205) sich jeweils nicht parallel zur dritten und vierten Bildaufbaurichtung (210, 215) ausgerichtet sind.

37. MEMS-Spiegel-Anordnung (100) gemäß einem der 34, 35 oder 36,
wobei die MEMS-Spiegel-Anordnung (100) derart ausgebildet und eingerichtet ist, dass zumindest eine erste Gruppe von sich im Wesentlichen parallel zueinander erstreckenden ausleuchtbaren Trajektorienabschnitten eine erste Bildaufbaurichtung (200) aufweist und eine zweite Gruppe von sich im Wesentlichen parallel zueinander erstreckenden ausleuchtbaren Trajektorienabschnitten eine zweite Bildaufbaurichtung (205) aufweist, wobei die erste Bildaufbaurichtung (200) und die zweite Bildaufbaurichtung (205) entgegengesetzt zueinander ausgerichtet sind,
wobei in einem Bereich des wahrnehmbaren Sichtfeldes (115) mit einer Größe von mindestens 50%, vorzugsweise mindestens 75%, des gesamten vom Betrachter (150) wahrnehmbaren Sichtfeldes (115) jedes Paar unmittelbar benachbarter und im Wesentlichen parallel zueinander erstreckender ausleuchtbarer Trajektorienabschnitte einen Trajektorienabschnitt umfasst, welcher der ersten Gruppe zugeordnet ist, und einen Trajektorienabschnitt umfasst, welcher der zweiten Gruppe zugeordnet ist.

38. MEMS-Spiegel-Anordnung (100) gemäß dem voranstehenden Anspruch,

wobei die MEMS-Spiegel-Anordnung (100) derart ausgebildet und eingerichtet ist, dass zusätzlich eine dritte Gruppe von sich im Wesentlichen parallel zueinander erstreckenden ausleuchtbaren Trajektorienabschnitten eine dritte Bildaufbaurichtung (210) aufweist und eine vierte Gruppe von sich im Wesentlichen parallel zueinander erstreckenden ausleuchtbaren Trajektorienabschnitten eine vierte Bildaufbaurichtung (215) aufweist,
wobei die MEMS-Spiegel-Anordnung (100) derart ausgebildet und eingerichtet ist, dass die dritte Bildaufbaurichtung (210) und die vierte Bildaufbaurichtung (215) im Wesentlichen parallel und entgegengesetzt zueinander ausgerichtet sind,

wobei die MEMS-Spiegel-Anordnung (100) derart ausgebildet und eingerichtet ist, dass die erste Bildaufbaurichtung (200) und die zweite Bildaufbaurichtung (205) jeweils nicht im Wesentlichen parallel zur dritten und vierten Bildaufbaurichtung (210, 215) ausgerichtet sind,

wobei die MEMS-Spiegel-Anordnung (100) derart ausgebildet und eingerichtet ist, dass in einem Bereich des wahrnehmbaren Sichtfeldes (115) mit einer Größe von mindestens 50%, vorzugsweise mindestens 75%, des gesamten vom Betrachter (150) wahrnehmbaren Sichtfeldes (115), jedes Quartett ausleuchtbarer, unmittelbar benachbarter und eine gedachte Raute umschließender Trajektorienabschnitte einen Trajektorienabschnitt umfasst, welcher der ersten Gruppe zugeordnet ist, und einen Trajektorienabschnitt umfasst, welcher der zweiten Gruppe zugeordnet ist, und einen Trajektorienabschnitt umfasst, welcher der dritten Gruppe zugeordnet ist und einen Trajektorienabschnitt umfasst, welcher der vierten Gruppe zugeordnet ist.

39. MEMS-Spiegel-Anordnung (100) gemäß einem der Ansprüche 37 oder 38,

wobei die MEMS-Spiegel-Anordnung (100) derart ausgebildet und eingerichtet ist, dass die Trajektorienabschnitte der ersten Gruppe der ersten Bildaufbaurichtung (200) folgend ausleuchtbar sind mit einer potentiellen Bildaufbaugeschwindigkeit von mindestens 900 Grad pro Sekunde, vorzugsweise mindestens 1200 Grad pro Sekunde und besonders bevorzugt mindestens 1500 Grad pro Sekunde,

und wobei die MEMS-Spiegel-Anordnung (100) derart ausgebildet und eingerichtet ist, dass die Trajektorienabschnitte der zweiten Gruppe der zweiten Bildaufbaurichtung (205) folgend ausleuchtbar sind mit einer potentiellen Bildaufbaugeschwindigkeit von mindestens 900 Grad pro Sekunde, vorzugsweise mindestens 1200 Grad pro Sekunde und besonders bevorzugt mindestens 1500 Grad pro Sekunde.

Fig. 1

Fig. 2

Fig. 3

Fig. 4

Fig. 5

Fig. 6

EP 4 597 200 A1

Fig. 7

Fig. 8

EP 4 597 200 A1

Fig. 9

Fig. 10

Fig. 11

Fig. 12

Fig. 13

220

225

230

235

240

245

250

255

260

285 290

270

275 280

295 300

Fig. 14

305

310

315

320

325

Fig. 15

Europäisches Patentamt
European Patent Office
Office européen des brevets

# EUROPÄISCHER RECHERCHENBERICHT

**Nummer der Anmeldung**

EP 24 15 5133

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2022 005022 A1 (OQMENTED GMBH [DE]) 9. November 2023 (2023-11-09) * Absätze [0001] - [0084]; Abbildungen 1-4 * | 1-3,5-39 | INV. G02B26/10 |
| X | US 2015/286048 A1 (CHEN CHUNG-DE [TW] ET AL) 8. Oktober 2015 (2015-10-08) * Absätze [0020] - [0054]; Abbildungen 4-6 * | 1-3,5-39 | |
| X | US 2023/258923 A1 (WHEELWRIGHT BRIAN [US] ET AL) 17. August 2023 (2023-08-17) * Absatz [0068] * | 1-3,5-39 | |
| X | WO 2006/082827 A1 (BROTHER IND LTD [JP]; ASAI NOBUAKI [JP]; YAMADA SHOJI [JP]) 10. August 2006 (2006-08-10) * Absätze [0196] - [0201]; Abbildungen 1,13 * | 1-3,5-39 | |
| X | JP 2016 184018 A (TOYOTA CENTRAL RES & DEV; DENSO CORP; DENSO WAVE INC) 20. Oktober 2016 (2016-10-20) * Abbildungen 1-14; Tabellen 1-3 * | 1-3, 5-19, 27-33 | **RECHERCHIERTE SACHGEBIETE (IPC)** G02B G01S |
| X | US 2023/362337 A1 (REHER MARCEL [DE] ET AL) 9. November 2023 (2023-11-09) * Absätze [0066] - [0075]; Abbildung 3 * | 1,4-19, 27-30,33 | |
| X | ULRICH HOFMANN ET AL: "High-Q MEMS Resonators for Laser Beam Scanning Displays", MICROMACHINES, Bd. 3, Nr. 2, 6. Juni 2012 (2012-06-06), Seiten 509-528, XP055613944, DOI: 10.3390/mi3020509 * Abschnitt 6.7; Seite 524 - Seite 525; Abbildungen 21,22 * | 1,4-19, 27-30,33 | |

-/--

Der vorliegende Recherchenbericht wurde für alle Patentansprüche erstellt

| Recherchenort | Abschlußdatum der Recherche | Prüfer |
|---|---|---|
| München | 8. Juli 2024 | Baur, Christoph |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................................

& : Mitglied der gleichen Patentfamilie, übereinstimmendes Dokument

EPO FORM 1503 03.82 (P04C03)

Europäisches Patentamt

European Patent Office

Office européen des brevets

# EUROPÄISCHER RECHERCHENBERICHT

**Nummer der Anmeldung**

EP 24 15 5133

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | XU BIN ET AL: "Lissajous MEMS laser beam scanner with uniform and high fill-factor projection for augmented reality display", OPTICS EXPRESS, Bd. 31, Nr. 21, 9. Oktober 2023 (2023-10-09), Seite 35164, XP093181628, US ISSN: 1094-4087, DOI: 10.1364/OE.501578 * Abbildung 11a * ----- | 1 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 8. Juli 2024 | Baur, Christoph |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 15 5133

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-07-2024

| Im Recherchenbericht angeführtes Patentdokument | Datum der Veröffentlichung | Mitglied(er) der Patentfamilie | Datum der Veröffentlichung |
|---|---|---|---|
| DE 102022005022 A1 | 09-11-2023 | KEINE | |
| US 2015286048 A1 | 08-10-2015 | CN 104977786 A | 14-10-2015 |
| | | US 2015286048 A1 | 08-10-2015 |
| US 2023258923 A1 | 17-08-2023 | KEINE | |
| WO 2006082827 A1 | 10-08-2006 | KEINE | |
| JP 2016184018 A | 20-10-2016 | JP 6369365 B2 | 08-08-2018 |
| | | JP 2016184018 A | 20-10-2016 |
| US 2023362337 A1 | 09-11-2023 | CN 117396791 A | 12-01-2024 |
| | | EP 4237896 A1 | 06-09-2023 |
| | | US 2023362337 A1 | 09-11-2023 |
| | | WO 2022100846 A1 | 19-05-2022 |

Für nähere Einzelheiten zu diesem Anhang : siehe Amtsblatt des Europäischen Patentamts, Nr.12/82

EPO FORM P0461